(19) Europäisches Patentamt

European Patent Office

Office européen des brevets

(11) **EP 0 945 494 B1**

(12) **EUROPEAN PATENT SPECIFICATION**

(45) Date of publication and mention
of the grant of the patent:
**12.05.2004 Bulletin 2004/20**

(21) Application number: **96931287.5**

(22) Date of filing: **24.09.1996**

(51) Int Cl.[7]: **C09C 1/48**, C09C 1/56,
C09D 11/00, C09D 7/12,
C08L 21/00, C08K 3/04,
C09C 1/60

(86) International application number:
**PCT/JP1996/002736**

(87) International publication number:
**WO 1997/011128 (27.03.1997 Gazette 1997/14)**

(54) **MOLDED BODY OF CARBON BLACK**

FORMKÖRPER AUS RUSS

CORPS EN NOIR DE CARBONE MOULE

(84) Designated Contracting States:
**DE FR GB IT**

(30) Priority: **22.09.1995 JP 24443095**
**24.11.1995 JP 30564195**
**19.12.1995 JP 33020095**
**20.12.1995 JP 33181595**
**20.12.1995 JP 33181695**
**20.12.1995 JP 33181795**
**20.12.1995 JP 33181895**
**20.12.1995 JP 33181995**
**20.12.1995 JP 33182095**
**20.12.1995 JP 33182195**
**23.04.1996 JP 10136196**

(43) Date of publication of application:
**29.09.1999 Bulletin 1999/39**

(73) Proprietor: **MITSUBISHI CHEMICAL**
**CORPORATION**
**Chiyoda-ku, Tokyo 100-0005 (JP)**

(72) Inventors:
• **IKEDA, Michihiro, Mitsubishi Chem. Corp**
**Devel.Cent**
**Kitakyushu-shi, Fukuoka-ken 806 (JP)**
• **YAMAMOTO Takaharu, Mitsubishi Chem.Corp.**
**Kur.Plant**
**Kitakyushu-shi, Fukuoka-ken 806 (JP)**
• **HASHIGUCHI, Tadashi, Mitsubishi Chem.Corp**
**K.Plant**
**Kitakyushu-shi, Fukuoka-ken 806 (JP)**
• **FUKUYAMA, Hiroshi, Mitsubishi Chem.Corp.**
**Kur.Plant**
**Kitakyushu-shi, Fukuoka-ken 806 (JP)**

(74) Representative:
**ter Meer, Nicolaus, Dipl.-Chem., Dr.**
**TER MEER STEINMEISTER & PARTNER GbR,**
**Patentanwälte,**
**Mauerkircherstrasse 45**
**81679 München (DE)**

(56) References cited:
**EP-A- 0 590 523      JP-A- 2 142 858**
**JP-A- 51 014 192      JP-A- 53 002 554**

• **DATABASE WPI Week 9202 Derwent**
**Publications Ltd., London, GB; AN 92011390**
**XP002109755 & JP 03 259962 A (BRIDGESTONE**
**CORP.), 20 November 1991 (1991-11-20)**

**Description**

TECHNICAL FIELD

The present invention relates to a molded product of carbon black.

BACKGROUND ART

At present, carbon black produced by a furnace method (hereinafter referred to as "furnace black") is distributed as the main product in the carbon black market.

Historically, lamp black and thermal black were present as carbon black. Presently, however, majority of the products on the market is the one produced by a furnace method developed by Phillips in 1942 i.e. a method wherein a feed oil is sprayed in a furnace heated to a temperature of at least 1300°C to obtain carbon black. This may be attributable to the excellent productivity such as the high yield and at the same time to the properties of furnace black, especially such that the one having a small particle size and small structure can be obtained, and it provides excellent performance to increase blackness of an ink or a coating material.

On the other hand, such furnace black tends to be difficult to be dispersed in a vehicle due to its small particle size and small structure and a less amount of material adsorbed on its surface.

Further, it has a problem of pollution and dusting characteristics due to the small particle size and low bulk density, and there is a substantial environmental problem in connection with its transportation or use. Namely, carbon black produced by a furnace method usually has an extremely low bulk density at a level of about 0.1 g/cc immediately after the production. Due to this low bulk density, the cost for packing bags, the cost for storage at a warehouse and the cost for transportation by trucks, freight cars or ships, are expensive, and dusting is substantial during distribution or use, whereby environmental pollution is problematic.

In order to solve such problems, it has been common to employ a dry granulated product or a wet granulated product which is a so called beads product. The beads product has a bulk density of from 0.3 to 0.5 g/cc which is substantially higher than non-treated carbon black. However, it is not still adequate in preventing dusting at the time of weighing or in preventing powdering of the granulated product during transportation.

Further, by the granulation, the dispersibility will be poor in a vehicle such as a varnish or resin which is a material for an ink or a coating material. Therefore, the beads product may sometimes be not useful for this purpose. In this connection, according to the finding by the present inventors, the beads products is granulated with carbon black particles having a long structure mutually entangled during the granulation process, whereby the dispersibility tends to be poor.

Thus, the handling efficiency and the dispersibility in a vehicle, of carbon black, particularly furnace black which can be made to have a small particle size, are in an antinomic relation to each other, and it has been believed difficult to satisfy the handling efficiency and the dispersibility simultaneously. For example, "Carbon Black Hand Book, third edition" (p. 563), compiled by Carbon Black Association, discloses that "there will be a substantial need for developing a carbon black excellent in handling efficiency free from substantial pollution or a readily dispersible carbon black to further improve the quality and productivity of an ink; and the handling efficiency and the dispersibility of carbon black is in an antinomic relation, and an improvement beyond the fence of e.g. the surface chemistry or rheology, or the formulation, packaging or shipping form of carbon black, is required". As is evident from this disclosure, it has been generally believed that it is extremely difficult to satisfy the handling efficiency and the dispersibility simultaneously. Various proposals have been made heretofore, but no case has been reported wherein these two problems have been solved simultaneously.

With respect to carbon black such as lamp black present prior to development of furnace black, for example, U.K. Patent 511,862 (filed in 1941) discloses an attempt to improve the handling efficiency by improving the bulk density by press deaerating lamp black or the like, and U.K. Patent 618,955 (filed in 1946) proposes an apparatus for the press deaeration of U.K. patent 551,862.

Further, German Patent 1302382 (filed in 1966) discloses that a molded product of lamp black having a density of from 0.160 to 0.480 g/cc was obtained by an apparatus to increase the density by a press.

Also with respect to furnace black, for example, JP-A-3-259962 discloses an attempt to improve the handling efficiency by coating a casein/starch/polyvinyl alcohol aqueous solution and a styrene/butadiene latex or an acrylic latex on the surface of a block of carbon black by drying the block after suction filtration of an aqueous slurry of carbon black. However, by this method, it is necessary to prepare a slurry of carbon black which is superfine powder and to subject this slurry to filtration and drying, whereby substantial labor and costs will be required. Yet, the obtained block is considered to be poor in the dispersibility.

Further, JP-A-6-122111 discloses that a carbon black powder is charged into a closed mold and subjected to reduced pressure treatment, and then the pressure in the mold is returned to atmospheric pressure to obtain a molded product. However, the molding pressure exerted by reduced pressure is less than atmospheric pressure (about 1.03 $kg/cm^2$), whereby the bulk density can not be increased to such an extent to reduce the transportation cost or the storage cost in a warehouse.

Further, it has been found that the molded product thereby obtained has substantial irregularities on its surface. This is considered to be attributable to the fact that carbon black as a bulky powder is compressed by the atmospheric pressure difference, whereby a part of the charged carbon black has scattered.

Accordingly, powdering or breakage during the transportation will result, and the handling efficiency (compacting) and the dispersibility are not simultaneously satisfied.

As described in the foregoing, with respect to furnace black, there has been no technology developed to solve the problem of the antinomic relation of the handling efficiency and the dispersibility which has been generally recognized and to satisfy the two properties simultaneously, and a product in a powder form or a granular form is still being distributed, whereby the above-described problem such as dusting has not been solved. Namely, if the basic properties required when carbon black is used for various applications such as a coating material, an ink, a resin coloring or rubber reinforcement, are impaired in an attempt to improve the storage and transportation costs, the handling efficiency or the environment, such a product can not be regarded as satisfactory as a commercial product, and can not be accepted in the market.

EP-A-0 370 490 relates to compacted carbon black flake pellets having a bulk density of from 0.10 to 0.05 g/$cm^3$ and an initial dispersion of at most 5.0%. The problem underlying EP-A-0 370 490 is the provision of carbon black compacted flake pellets, the storage and transportation of which is facilitated, the scattering is prevented and the dispersibility to a vehicle is not impaired.

DISCLOSURE OF THE INVENTION

The present inventors have conducted extensive studies to solve the above problems. As a result, it has been surprisingly found that the dispersibility and improvement of the bulk density can simultaneously be satisfied by controlling the molded density which is the density of a molded product obtained by press molding carbon black, the particle size and the DBP oil absorption within a specific relation. The present invention has been accomplished on the basis of this discovery. Further, it has surprisingly been found that this molded product improves blackness when used as a coating material, over the starting material carbon black powder (loose product).

Namely, the present invention provides a press molded product as specified in claim 1.

BRIEF DESCRIPTION OF THE DRAWINGS

Figure 1 illustrates an embodiment of a press molding apparatus which can be used for the production of a press molded product of the present invention.

Figure 2 illustrates another embodiment of a press molding apparatus which can be used for the production of a press molded product of the present invention.

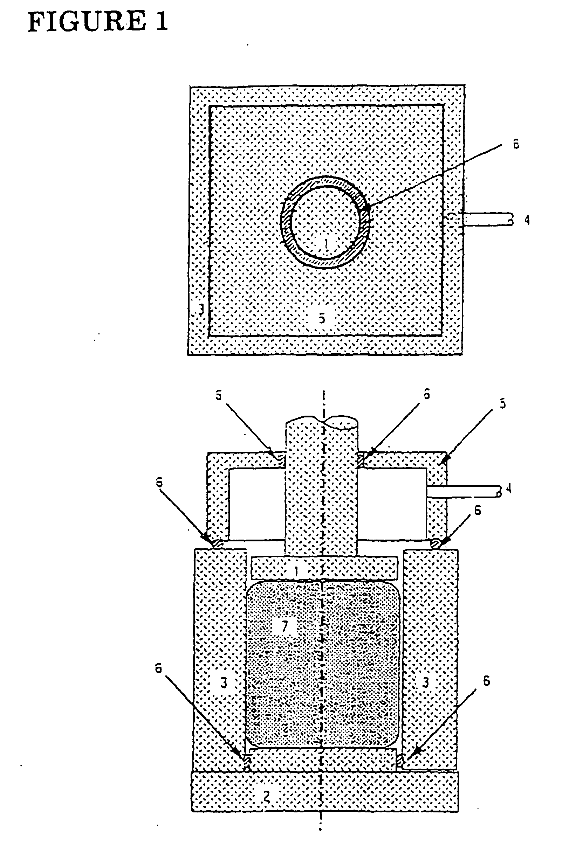

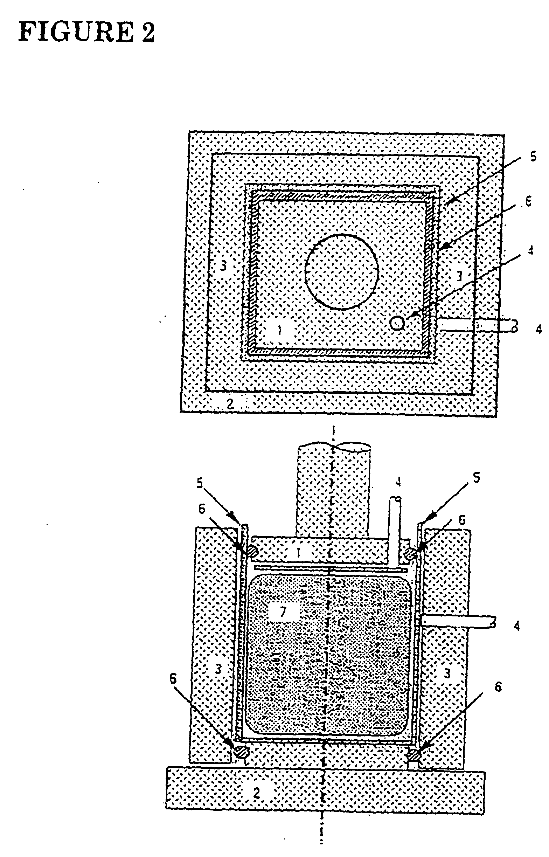

In Figures 1 and 2, reference numeral 1 indicates an upper punch, numeral 2 a lower punch, numeral 3 a die, and numeral 5 a reduced pressure chamber.

Now, the present invention will be described in detail.

Firstly, the carbon black to be used in the present invention, may, for example, be carbon black produced by a furnace method or acetylene black. Among them, it is preferred to use furnace black produced by a furnace method, since it provides a remarkable effect for maintaining the dispersibility. Further, it provides a substantial effect for improving blackness.

Further, it is also possible to employ the one prepared by post-treating the carbon black produced by such a method, with various oxidizing agents.

The particle size of the carbon black is not particularly limited. However, when it is within a small particle range of from 1 to 60 nm, particularly from 1 to 50 nm, the effect for improving the handling efficiency and the dispersibility is high, and a high effect is obtained also for improvement of blackness.

Carbon black having fine particle sizes within such a range has a strong tendency for agglomeration of particles and used to be difficult to disperse at the time of producing an ink, a coating material, a colored resin, a rubber or the like. An additional merit may be pointed out that the merit of the present invention is even larger with respect to such carbon black which is normally difficult to disperse.

In the present invention, such carbon black is molded by pressing. The mold to be used may be made of any material so long as it has a sufficient strength durable against the pressure applied during molding. For example, as a metallic mold, a stainless steel mold made of e.g. SUS304 or SUS316 or a mold made of super steel such as tungsten carbide, may be used. As a resin mold, a mold made of a fluorine resin ("Teflon", tradename) such as polytetrafluoroethylene (PTFE), polychlorotrifluoroethylene (PCTPE) or polytetrafluoroethylene-hexafluoropropylene (FEP), a mold made of a plastic such as nylon, polyethylene, polycarbonate or a phenol resin, or a mold made of a composite material, for example, FRP such as CFRP or GFRP, may be used. As a ceramic mold, a mold made of e.g. alumina, zirconia or mullite may be used.

The size of the mold is at least 1 $cm^3$, preferably at least 100 $cm^3$. If it is less than 1 $cm^3$, the transportation tends to be cumbersome. If necessary, a molded product of a large size may prepared, and it may be cut into a proper size for use or transportation.

The pressing machine which can be used for pressing, may be any press molding machine so long as press molding can be done, such as a hydraulic mechanical pressing machine, a hydraulic hand pressing machine, a mechanical pressing machine or an air cylinder type pressing machine.

The shape of the mold is not particularly limited and depends upon the desired shape of the molded product, such as a columnar shape having a triangle or other polygonal cross-section, particularly a cubic or rectangular parallelpiped shape, which is advantageous from the viewpoint of handling.

Carbon black is introduced into the above mold and molded by pressing. Here, the density of the obtained molded product is adjusted within the following specific range.

Namely, the density $\rho$ (g/$cm^3$) is adjusted to be at least

$$\rho = 8.190 \times 10^{-3}D - 3.824 \times 10^{-3}L + 0.516$$

and at most

$$\rho = 3.265 \times 10^{-3}D - 3.334 \times 10^{-3}L + 1.173$$

more preferably at least

$$\rho = 8.686 \times 10^{-3}D - 4.031 \times 10^{-3}L + 0.543$$

and at most

$$\rho = 3.123 \times 10^{-3}D - 3.189 \times 10^{-3}L + 1.072.$$

In the above formulas, D is the arithmetic mean particle size (nm) of carbon black by an electron microscope, and L is the DBP oil absorption (ml/100 g).

Here, the DBP oil absorption is a value measured by a method in accordance with JIS K6221-1982.

Further, the particle size of carbon black is a value measured by the following method. Namely, carbon black is put in chloroform and dispersed by application of supersonic waves of 200 KHz for 20 minutes, and then the dispersed sample is fixed on a supporting film. The film is photographed by a transmission electron microscope, and a particle size is calculated by the diameter on the photograph and the magnification of the photograph. This operation is carried out over about 1500 times, and an arithmetic mean of such values is taken as the particle size.

By controlling the density within the above range, the molded product will be excellent in the handling efficiency without impairing the basic properties of carbon black such as the dispersibility in a vehicle.

Further, a surprising effect is obtained such that blackness when used for an ink or a coating material, can be improved as compared with the starting material powder. These effects can be obtained particularly remarkably within the above-mentioned preferred range.

The molded product of carbon black of the present invention preferably has a powdering ratio of at most 40%, more preferably at most 20%. The powering ratio can be obtained by a measuring method which will be described hereinafter in Examples. By controlling the powdering ratio to a level of at most 40%, powdering by an external force such as vibration or friction exerted to the molded product during transportation, can be prevented, and the product will be excellent particularly in the handling efficiency.

Further, the ratio (hereinafter sometimes referred to as "the bulk density ratio") of the bulk density of the molded product of carbon black to the bulk density of powdery carbon black as the starting material is preferably at least 2.5 times and at most 8 times, more preferably at least 3 times and at most 7 times. If this bulk density ratio is lower than 2.5, the compacting property of the molded product tends to be low. On the other hand, if the bulk density ratio exceeds 8, the dispersibility tends to be low. When the bulk density ratio is at least 2.5 and at most 8, the compacting property and the dispersibility will be simultaneously satisfied within preferred ranges.

The pressure during press molding (molding pressure) is preferably at least 0.196 mPa (2 kgf/cm$^2$) and at most 49 mPa (500 kgf/cm$^2$), more preferably at least 0.49 mPa (5 kgf/cm$^2$) and at most 39.2 mPa (400 kgf/cm$^2$). If the molding pressure is lower than 0.196 mPa (2 kgf/cm$^2$), the compacting property tends to be low, and the powdering ratio tends to increase.

On the other hand, if the molding pressure is higher than 49 mPa (500 kgf/cm$^2$), the dispersibility tends to be inadequate by a dispersing machine commonly used for the preparation of an ink or a coating material. On the other hand, even if the pressure is increased beyond this level, no additional effect for improvement of the compacting property can be obtained. Accordingly, to obtain a molded product of carbon black to be used for the production of an ink, a coating material, a colored resin or a rubber industrially, press molding is preferably conducted under a molding pressure of at least 0.196 mPa (2 kgf/cm$^2$) and at most 49 mPa (500 kgf/cm$^2$).

Further, at the time of press molding, it is possible to employ a method wherein press molding is carried out after preliminarily degassing a gas among carbon black particles by means of a reduced pressure chamber. For example, the following method may be employed, which will be described with reference to the apparatus shown in Figures 1 and 2.

Firstly, a carbon black powder as a starting material to be molded, is filled into a mold having a slidable cylinder and a piston, as shown in Figures 1 and 2. The inside of a vacuum chamber set above the cylinder and the inside of the cylinder are substantially sealed from the exterior by a gasket material. Then, a vacuum pump connected to the vacuum chamber is driven to lower the piston to press mold the carbon black in the cylinder while maintaining the vacuumed condition . Thereafter, the operation of the vacuum pump is stopped, and the pressure of the atmosphere in the chamber and the cylinder is returned to atmospheric pressure. Then, the vacuum chamber and the piston are raised, and the molded product of carbon black is taken out. Thus, degassing of the gas among carbon black particles by the reduced pressure chamber and subsequent press molding of carbon black can be carried out.

Here, the reduced pressure is preferably from 1.33 Pa to 6.67·10$^4$ Pa (0.01 to 500 Torr). At a pressure of not higher than 6.67·10$^4$ Pa (500 Torr), degassing among particles is very easy. On the other hand, no additional effect can be obtained even if the pressure is reduced to a level of less than 1.33 Pa (0.01 Torr), and cumbersomeness increases to attain such a high vacuumed condition.

The method for accomplishing the desired degree of reduced pressure is not particularly limited. For example, an oil rotary type vacuum pump, an aspirator, a sliding type vacuum pump, a free piston type vacuum pump, a diaphragm type vacuum pump, a diffuser pump or a turbo vacuum pump may, for example, be mentioned.

Control of the density of the press molded product of carbon black can be made by measuring the resistance. In such a case, the density control can be made by measuring the resistance of the molded product during or after press molding. For measurement of the resistance, a two probe method, a four terminal method, a four probe method or a van der Pauw method is, for example, available. Among these methods, a four probe method is most suitable for the density measurement of the press molded product of carbon black of the present invention, since measurement can be carried out simply by pressing electrode probes to the sample. Further, as the resistance, it is preferred to employ the volume resistance as an index of the specific resistance independent of the shape of the sample. The volume resistance can be obtained by arithmetic processing of the result measured by the four probe method.

Further, in order to make the press molded product to have a thickness suitable for industrial application, an operation of filling and pressing the starting material may be repeated a plurality of times, whereby it is possible to control the size of the press molding apparatus. In such a case, it is preferred to control the final pressing pressure in the pressing operation to a level of 1.2 times of the maximum pressure among the pressures for the pressing operation prior to the final pressing operation, whereby it is possible to obtain a molded product as a continuous body in which no substantial joint lines of layers formed by the respective pressing operations are present.

It is also effective to carry out press molding by an apparatus which has a porous body having an average pore size of at most 10 μm at at least a part of the contacting surface of the press molding apparatus with the carbon black, so as to prevent adhesion of the carbon black to the mold or to prevent breakage of the press molded product. This embodiment can be practiced by using, for example, a filter paper, a filter cloth or a fluorine resin as the porous body. For example, such a porous body may be bonded to a piston of the press molding apparatus.

When the press molded product is taken out from the mold, it is effective to release the press molded product from the mold under a pressurized state, so as to prevent breakage of the press molded product. The pressure at the time of such releasing is preferably from 9.8·10$^{-4}$ mPa to 0.49 mPa (0.01 to 5 kgf/cm$^2$) and within a range not to exceed the pressure during the press molding, which is particularly effective for preventing breakage. Further, it is also effective to use a carbon black having its water content adjusted to a level of from 0.5 to 11 wt%, or a carbon black which is preliminarily granulated, for preventing breakage, depending upon the particular application.

The shape of the molded product of carbon black is not particularly limited, but is preferably a columnar shape having a polygonal cross-section, more preferably cubic or rectangular parallelpiped. A truck or a freight car for transporting carbon black or a warehouse is usually rectangular parallelpiped. Accordingly, the molded product of the above-mentioned shape can be filled in such a space compactly, whereby the transportation cost or the cost for storage in a warehouse can effectively be reduced.

The press molded product of carbon black as described in the foregoing, has a high bulk density and is excellent in the compacting property, whereby it is possible to substantially reduce the storage and transportation costs which occupy a substantial proportion in the costs for the production and distribution of carbon black, by storing and transporting carbon black in the form of such a press molded product of carbon black, which is industrially extremely advantageous.

Here, "the storage" includes storing, accommodating or keeping in a open or closed space such as a warehouse or else temporarily or over a long period of time. Usually, the product is maintained in a prescribed space for a predetermined period of time until next transportation or use. Further, in view of convenience to bring in or take out from the warehouse, it may be stored in a warehouse in a state piled on a pallet or put in various containers.

The press molded product of carbon black of the present invention, as described above, can be used as a pigment for an ink, a coating material or a resin composition, whereby a product excellent in blackness and gloss can be obtained.

In such a case, a conventional method can be employed except that the press molded product of carbon black of the present invention is used as a pigment for an ink, etc.

When it is used as a pigment for an ink, a conventional method may be employed for blending the molded product of carbon black in a varnish as a vehicle. Further, the dispersing step is not particularly limited, and a conventional method may be employed, except that the molded product of carbon black of the present invention is used.

The varnish (vehicle) to be used is not particularly limited, so long as it is useful for an ink. For example, as a varnish to be used for printing, a mixture of a rosin-modified phenol resin, an alkyd resin and drying oil, which is used for lithographic printing, may be mentioned. As a varnish to be used for relief printing, a mixture comprising a natural resin such as gilsonite or rosin, a synthetic resin such as a rosin-modified phenol resin, a maleic acid resin, a petroleum resin, an alkyd resin or ester gum, a vegetable oil such as linseed oil or tung oil, and a mineral oil such as an ink oil or a solvent oil, may be mentioned. As a varnish to be used for a rotary press ink, a mixture comprising a resin such as gilsonite, a rosin-modified phenol resin, a rosin ester resin, a maleic acid resin or an alkyd resin, a drying oil such as linseed oil or tung oil and a mineral oil such as ink oil, ink solvent, spindle oil or machine oil, may be mentioned. As a varnish to be used for a gravure ink, a mixture comprising a resin such as a rosin-modified resin, a maleic acid resin or gilsonite, and a solvent such as toluene, n-hexane or cyclohexane, may be mentioned. As a varnish to be used for an aqueous gravure ink, a mixture comprising a resin such as a polyvinyl alcohol or starch and various alcohols, may be mentioned. As a varnish to be used for a flexo ink, a mixture comprising a resin such as a rosin-modified maleic acid resin, a styrene acrylic acid resin, a styrene maleic acid resin, a styrene methacrylic resin, an acrylate acrylic acid resin or a methacrylate acrylic acid resin, and a solvent such as glycol, an alcohol, an ester or an aliphatic hydrocarbon, may be mentioned. Further, as a varnish to be used for a screen ink, a mixture comprising a resin such as an acrylic resin, a vinyl chloride-vinyl acetate copolymer, a polyester resin, a cellulose resin, an epoxy resin, a melanine resin, various polyols, an alkyd resin or various acrylates, and a solvent such as various alcohols, various ethers, various ketones, various aromatic hydrocarbons, various aliphatic hydrocarbons or various halogen type solvents, may be mentioned.

The ink for which the present invention may be used, is not particularly limited, and may, for example, be a relief printing ink such as news ink, rotary press ink or half tone block ink, a lithographic printing ink such as offset ink, dry offset ink or colo type ink, an intaglio printing ink such as engraved intaglio ink, gravure ink, quick set ink, gloss ink, abrasion resistant ink, heat set ink, steam set ink, pressure set ink, plastisol ink, balanced ink, cold set ink or raset ink, or others such as a rubber plate ink, an aniline ink, a tin plate printing ink, an ink for plastic film, a silk screen ink or a water base ink. The press molded product of carbon black of the present invention can be used for the production of any one of these inks.

A method for dispersing the press molded product of carbon black of the present invention in a vehicle, is not particularly limited. It may be used in a size as taken out from the mold used for press molding. Otherwise, it may be crushed to a diameter of from 0.1 mm to 1 cm so that the size will be smaller than the inlet of a kneader, and then put into the kneader for dispersing. The effect for improving blackness can be obtained even when the crushed product is used.

Here, the crushing method is not particularly limited, but it is preferred to use a shearing type crusher such as a cutting mill, a rotary crusher or a shearing roll mill, whereby the density of the particles will not be increased during crushing.

When the press molded product of carbon black of the present invention is to be used as a pigment for a resin composition, the resin useful for this purpose is not particularly limited and may, for example, be a thermoplastic resin such as a low density polyethylene, a high density polyethylene, a polypropylene, a polystyrene, a vinyl chloride resin, a polyvinyl alcohol, a vinylidine chloride resin, a methacrylic resin, a polyamide, a polycarbonate, a polyacetal, a polyethylene terephthalate, a polybutylene terephthalate, a modified polyphenylene ether or nylon, or a thermosetting resin such as a phenol resin, a urea resin, a melamine resin, an unsaturated polyester resin or a urethane foam. Further, a mixture of these resins, or a resin having various additives incorporated thereto, may be used.

To such a resin component, the press molded product of carbon black of the present invention is added and kneaded, as the case requires. Here, as a kneader for rubber, the one commonly used as a kneader for rubber, such as a roll mixer of a batch system open type, a Banbury type mixer of a batch system closed type, a single screw kneading extruder or a twin screw kneading extruder of a continuous screw type, a single shaft kneader of a continuous rotor type, or a twin shaft kneader of a continuous rotor type, may be used.

When the press molded product of carbon black of the present invention is used as a pigment for a coating material, the varnish (vehicle) to be used for this purpose is not particularly limited so long as it is commonly used for a coating material. For example, it may be drying oil, improved drying oil, a natural resin or bitumen for an oil base coating material. It may be shellac for an alcoholic coating material. It may be nitrocellulose, acetyl cellulose, an acrylic resin, a phenol formaldehyde resin or a resin modified phenol formaldehyde resin for a cellulose derivative coating material. It may be an oxidized oil-modified alkyd resin, a modified alkyd resin, a butyrated aminoalkyd resin, an aminoalkyd resin, polyvinyl acetate, polyvinyl chloride, chlorinated rubber, a styrene-butadiene resin, a thermosetting acrylic resin, an epoxy resin, an unsaturated polyester, a polyisocyanate resin, silicone and an alkyd resin, or butyl titanate for a synthetic resin coating material. It may be polyvinyl acetate, polystyrene-butadiene or a polyacrylic compound for a synthetic emulsion paint. It may be a phenol aldehyde polycondensate, an etherified melamine resin or an amine-neutralized alkyd resin for a water-base baking paint. It may be a protein·starch·arginate·polyvinyl alcohol or carboxymethyl cellulose for a water base coating material. Natural high grade phenol or a natural phenol aldehyde resin may be used for a Japanese lacquer.

The coating material is also not particularly limited. For example, according to classification based on the main components of the coating films, it may, for example, be an oil paint, an oil enamel, a phenol resin or maleic acid resin coating material, an alkyd resin coating material, an aminoalkyd resin coating material, a urea resin coating material, an alcoholic coating material, a lacquer, a vinyl resin coating material, an acryl resin coating material, a polyester resin coating material, an epoxy resin coating material, a polyurethane resin coating material, a silicone resin coating material, a emulsion resin coating material or a watersoluble resin coating material.

Further, the press molded material of carbon black of the present invention may be blended with at least one of natural rubber and synthetic rubber to obtain a rubber composition. In such a case, the press molded material is blended in an amount of from 30 to 150% by weight per 100 parts by weight of rubber, whereby it is possible to obtain a rubber composition having a small loss factor or heat build-up.

The rubber to be used here is not particularly limited. For example, the synthetic rubber may be styrene butadiene rubber (SBR), butadiene rubber (BR), isoprene rubber (IR), chloroprene rubber (CR), nitrilebutadiene rubber (NBR), isobutylene isoprene rubber (IIR), ethylene propylene rubber (EPM), silicone rubber, fluorine rubber, chlorosulfonated polyethylene (CSM), chlorinated polyethylene (CM), polysulfide rubber, urethane rubber (AU), acryl rubber (ACM), epichlorohydrin rubber (ECO), propylene oxide rubber (PO), an ethylenevinyl acetate copolymer (EVA), liquid rubber, polyalkylene sulfide, or nitroso rubber. Natural rubber, or a mixture of such rubbers may also be used. Further, a vulcanizing agent, a cross-linking agent, a vulcanization accelerator, a vulcanization accelerating adjuvant, an activating agent, a dispersant, a vulcanization retardant, an age resistor, a reinforcing agent or filler other than carbon black, a softening agent, a plasticizer, an adhesive agent, a colorant, a curing agent, a foaming agent, a lubricant, a solvent, a surfactant, an emulsifier, a stabilizer, a wetting agent, a thickener, a solidifying agent, a geling agent, a creaming agent, an anticeptic, or a defoaming agent, may be incorporated, as the case requires.

To the above rubber component, the press molded product of carbon black of the present invention is added and kneaded to obtain a rubber composition. The kneader to be used here may be the one commonly used as a kneader for rubber, such as a roll mixer of a batch system open type, a Banbury mixer of a batch system closed type, a single screw kneading extruder or a twin screw kneading extruder of a continuous screw type, a single shaft kneader of a continuous rotor type or a twin shaft kneader of a continuous rotor type.

Now, the present invention will be described in further detail with reference to Examples.

EXAMPLES 1 to 6

Carbon black was press-molded using as the carbon black the one identified in Table 1, using as a pressing machine a 37 ton four columnar single acting hydraulic press (ram diameter: 152.4 mm) and using as a mold a SUS 304 mold (inner size: 70 mm × 70 mm, height: 40 mm, manufactured by Mitsubishi Kasei Engineering K.K.).

A method for measuring an ink screen residue to test the dispersibility of carbon black for the preparation of an ink, will be described. Into an about 1.8 ℓ stainless steel container (diameter: 11 cm, height: 18.5 cm) 480 g of Reductus #220 (manufactured by Kyodo Sekiyu) and 120 g of a molded product of carbon black or a granulated product of carbon black, were added. A stirrer (four vanes, diameter of each vane: 4.5 cm) set in a TK AUTO HOMOMIXER SL10A (manufactured by Tokushu Rika Kogyo) was inserted at 2 cm above the bottom of the stainless steel container. The stirrer was operated at 5000 rpm and stirring was carried out for 1 hour. 50 g of the mixture was sampled and subjected to filtration with a stainless steel screen of 325 mesh (opening: 46 μm). After the filtration, about 200 cc of light oil was sprinkled on the screen for washing. This screen was dried for 1 hour in a dryer set at 150°C. Then, the screen was taken out from the dryer and cooled, and then the weight of the screen was measured. The weight of the initial screen preliminarily measured, was subtracted from the measured value to obtain the weight (A g) of the carbon black remaining on the screen, whereby the screen residue was calculated by the following formula.

$$\text{Screen residue (\%)} = (A \times 600/(50 \times 120)) \times 100$$

For measurement of the density, the three dimensions of the rectangular parallelpiped were measured by calipers, and from the measured values, the volume ($cm^3$) of the molded product was calculated. The weight (g) of the molded product was measured by an electronic direct reading type even balance. From the weight and the volume of the molded product, the density ($g/cm^3$) of the molded product was calculated.

A method for measuring the powdering ratio will be described. The press molded product of carbon black was accurately weighed for $25 \pm 1$ g (W) to an accuracy of 0.01 g, and put into a sieve having a diameter of 200 mm with an opening of 1 mm, as stipulated in JIS K-6221. A receptacle and a cover were attached to this sieve, and the sieve was shaked by a shaking machine as stipulated in JIS K-6221 for 20 seconds while applying shocks. The receptacle was detached from the shaking machine, and the weight of carbon black in the receptacle was accurately weighed to an accuracy of 0.01 g, and this was taken as the weight ($W_R$) after shaking, whereupon the powdering ratio was calculated by the following formula.

$$\text{Powdering ratio (\%)} = (W_R/W) \times 100$$

COMPARATIVE EXAMPLES 1 to 6

Using a powder product and a granulated product of the same brand name as used in preceding Examples, the density, the ink screen residue and the powdering ratio were measured in the same manner as in preceding Examples.

With respect to #45 (carbon black manufactured by Mitsubishi Chemical Corporation) and #990 (carbon black manufactured by Mitsubishi Chemical Corporation), reduced pressure-regained pressure products as disclosed in JP-A-6-122111 were prepared and presented in Comparative Examples.

Standards for evaluating the results

Tables 2 to 7 show the results of measurements in Examples and Comparative Examples, the compacting property and the dispersibility judged from these results, and the overall evaluation obtained by judging the compacting property, the dispersibility, etc. from overall aspects.

Here, the evaluation standards for the compacting property were as follows.

×: Bulk density at a level of a powder product
Δ: Bulk density higher than a powder product and not higher than a granulated product.
○: Bulk density higher than a granulated product.

Further, the evaluation standards for the dispersibility were as follows.

×: Dispersibility at a level of not higher than a granulated product.
Δ: Dispersibility slightly better than a granulated product.
○: Dispersibility superior to a granulated product.

The standards for overall evaluation were as follows.

×: Either the compacting property or the dispersibility is ×.
○: Not only the compacting property and the dispersibility but also the touch in use is good.
◎ : The compacting property, the dispersibility and the touch in use are excellent.

Discussion of the results

(1) When Example 1-2 and Comparative Example 1-9 are compared, the bulk density of Example 1-2 is 0.562 g/cm$^3$, which is higher than the bulk density of 0.488 g/cm$^3$ of Comparative Example 1-9. Nevertheless, the ink screen residue as an index for the dispersibility is 11.0% in Example 1-2 whereas it is 78% in Comparative Example 1-9, thus indicating that the molded product of Example 1-2 maintains the same dispersibility as prior to molding.

When Example 1-8 and Comparative Example 1-9 are compared, the bulk density is 1.050 g/cm$^3$ in Example 1-8 and 0.488 g/cm$^3$ in Comparative Example 1-9, thus indicating that in Example 1-8, improvement of the bulk density by about 2 times was accomplished. Whereas, the ink screen residue as an index for dispersibility is 74.0% in Example 1-8 and 78.0% in Comparative Example 1-9. Thus, Example 1-8 shows a dispersibility of at least equal to Comparative Example 1-9. As is evident from these results, according to the present invention, it is possible to obtain carbon black excellent in the compacting property (handling efficiency) and the dispersibility simultaneously, which have been believed to be in an antinomic relation to each other.

(2) When Example 2-2 and Comparative Example 2-9 are compared, the bulk density is 0.385 g/cm$^3$ in Example 2-2 and 0.393 g/cm$^3$ in Comparative Example 2-9. Thus, the bulk density of Example 2-2 is substantially equal to the bulk density of Comparative Example 2-9. Nevertheless, the ink screen residue as an index for dispersibility is 0.7% in Example 2-2 and 100% in Comparative Example 2-9. Thus, the molded product of Example 2-2 maintains the same dispersibility as prior to molding.

When Example 2-7 and Comparative Example 2-9 are compared, the bulk density is 0.850 g/cm$^3$ in Example 2-7 and 0.393 g/cm$^3$ in Comparative Example 2-9. Thus, in Example 2-7, improvement of the bulk density by about 2.2 times has been accomplished. Whereas, the ink screen residue as an index for dispersibility is 98.0% in Example 2-7 and 100% in Comparative Example 2-9. Thus, Example 2-7 shows a dispersibility of at least equal to the level of Comparative Example 2-9. As is evident from these results, according to the present invention, it is possible to obtain carbon black excellent in the compacting property (handling efficiency) and the dispersibility simultaneously, which have been believed to be in an antinomic relation to each other.

(3) When Example 3-2 and Comparative Example 3-10 are compared, the bulk density is 0.240 g/cm$^3$ in Example 3-2 and 0.303 g/cm$^3$ in Comparative Example 3-10. Thus, the bulk density of Example 3-2 is substantially the same as the bulk density of Comparative Example 3-10. Nevertheless, the ink screen residue as an index for dispersibility is 0.25% in Example 3-2 and 84.5% in Comparative Example 3-10. Thus, the molded product of Example 3-2 maintains the same dispersibility as prior to molding.

When Example 3-9 and Comparative Example 3-10 are compared, the bulk density is 0.750 g/cm$^3$ in Example 3-9 and 0.303 g/cm$^3$ in Comparative Example 3-10. Thus, in Example 3-9, improvement of the bulk density by about 2.5 times has been accomplished. Whereas, the ink screen residue as an index for dispersibility is 77.0% in Example 3-9 and 84.5% in Comparative Example 3-10. Thus, Example 3-9 shows at least the same level of dispersibility as Comparative Example 3-10. As is apparent from these results, according to the present invention, it is possible to obtain carbon black excellent in the compacting property (handling efficiency) and the dispersibility simultaneously, which have been believed to be in an antinomic relation to each other.

(4) When Example 4-2 and Comparative Example 4-9 are compared, the bulk density is 0.433 g/cm$^3$ in Example 4-2 and 0.497 cm$^3$ in Comparative Example 4-9. Thus, the bulk density of Example 4-2 is substantially the same as the bulk density of Comparative Example 4-9. Nevertheless, the ink screen residue as an index for dispersibility is 0.3% in Example 4-2 and 100% in Comparative Example 4-9. Thus, the molded product of Example 4-2 maintains substantially the same dispersibility as prior to molding.

When Examples 4-8 and Comparative Example 4-9 are compared, the bulk density is 0.990 g/cm$^3$ in Example 4-8 and 0.497 g/cm$^3$ in Comparative Example 4-9. Thus, in Example 4-8, improvement of the bulk density by about 2 times has been accomplished. Whereas, the ink screen residue as an index for dispersibility is 99.0% in Example 4-8 and 100% in Comparative Example 4-9. Thus, Example 4-8 shows at least the same level of dispersibility as Comparative Example 4-9. As is evident from these results, according to the present invention, it is possible to obtain carbon black excellent in both the compacting property (handling efficiency) and the dispersibility which have been believed to be in an antinomic relation to each other.

(5) When Example 5-2 and Comparative Example 5-7 are compared, the bulk density is 0.522 g/cm$^3$ in Example 5-2 and 0.517 cm$^3$ in Comparative Example 5-7. Thus, the bulk density in Example 5-2 is higher than the bulk density of Comparative Example 5-7. Nevertheless, the ink screen residue as an index for dispersibility is 0.5% in Example 5-2 and 80% in Comparative Example 5-7. Thus, the molded product of Example 5-2 maintains the same dispersibility as prior to molding.

When Examples 5-7 and Comparative Example 5-8 are compared, the bulk density is 0.945 g/cm$^3$ in Example 5-7 and 0.517 g/cm$^2$ in Comparative Example 5-8. Thus, in Example 5-7, improvement of the bulk density by about 1.8 times has been accomplished. Whereas, the ink screen residue as an index for dispersibility is 79.5% in Example 5-7 and 80.0% in Comparative Example 5-8. Thus, Example 5-7 and Comparative Example 5-8 show the same level of dispersibility. As is evident from these results, by the present invention, it is possible to obtain carbon black excellent in both the compacting property (handling efficiency) and the dispersibility which have been believed to be in an antinomic relation to each other.

(6) When Example 6-2 and Comparative Example 6-9 are compared, the bulk density is $0.345 \text{ g/m}^3$ in Example 6-2 and $0.364 \text{ g/cm}^3$ in Comparative Example 6-9. Thus, the bulk density of Example 6-2 is substantially the same as the bulk density in Comparative Example 6-9. Nevertheless, the ink screen residue as an index for dispersibility is 0.50% in Example 6-2 and 56.7% in Comparative Example 6-9. Thus, the molded product of Example 6-2 maintains the same level of dispersibility as prior to molding.

When Examples 6-7 and Comparative Example 6-8 are compared, the bulk density is $0.804 \text{ g/cm}^3$ in Example 6-7 and $0.364 \text{ g/cm}^3$ in Comparative Example 6-8. Thus, in Example 6-7, improvement of the bulk density by about 2.2 times has been accomplished. Whereas, the ink screen residue as an index for dispersibility is 28.1% in Example 6-7 and 56.7% in Comparative Example 6-8. Thus, Example 6-7 shows a dispersibility which is about twice as compared with Comparative Example 6-8. As is evident from these results, by the present invention, it is possible to obtain carbon black excellent in both the compacting property (handling efficiency) and the dispersibility, which have been believed to be in an antinomic relation to each other.

Application to ink Examples 7 to 12

With respect to evaluation methods in the following Examples and Comparative Examples, for the dispersibility, a grined gauge was used; for measuring the color difference, a method by a color difference measuring instrument and a method by visual observation were used; and for the gloss, visual observation was employed. Measurement by a grined gauge was carried out in the following manner. Namely, the grined gauge is the one having two grooves engraved on a steel plate so that the depth of the grooves varies from 0 to $25 \times 10^{-6}$ m. An ink is placed at the deepest portion and stretched towards a shallow portion by a scraper, whereupon the particle size is determined from the gradation at the position of striae formed at a portion shallower than the diameters of coarse particles ("Coloring Material Engineering Handbook", p. 1052-1053, published by Asakura Shoten).

Measurement of the color difference by a color difference meter was carried out as follows. Namely, "Lab color system was proposed by R.S. Hunter, and when three stimulating values of a standard light in a XYZ color system are designated as X, Y and Z, the following relation exists among L, a and b, where L is psychometric lightness, and a and b are indices for chromaticness:

$$L = 10Y^{1/2}$$

$$a = 17.2 \, (1.02X\text{-}Y)/Y^{1/2}$$

$$b = 7.0 \, (Y\text{-}0.847Z)/Y^{1/2}$$

("Titanium Oxide", edited by Manabu Seino, p. 92, published by Gihodo).

Measurement of a color difference by visual observation was carried out as follows. "Place a sample and a standard ink side by side on a prescribed paper and stretch them toward yourself with a knife having a broad front blade. With the knife slightly inclined toward yourself, pull it firmly toward yourself, and towards the end, gently pull the knife by inclining it at an angle of $30°$ to the paper, so as to form a portion where the ink film is thin and a portion where the ink film is thick so that the portion is free from an influence of the paper. At the thin portion, observe the bottom color i.e. the color of light reflected from the paper below and passed through the pigment, whereas at the thick portion, visually evaluate the top color of the ink or the color of the ink itself." ("Coloring Material Engineering Handbook" p. 1058, published by Asakura Shoten)

Measurement of the gloss by visual observation was carried out as follows. "The gloss as well as the color is an important characteristic substantially influencing the printing quality, and for its measurement, a method by visual observation and a method by a measuring apparatus are available. In the method by visual observation, the gloss is evaluated comparatively analytically by comparing it with a sample at an incident angle of light of $60°$." ("Coloring Material Engineering Handbook" p. 1058, published by Asakura Shoten)

EXAMPLE 7

150 g of varnish A manufactured by Nippon Shinbun Ink K.K., 90 g of varnish B manufactured by Nippon Shinbun Ink K.K., 48 g of varnish C manufactured by Nippon Shinbun Ink K.K., 90 g of a mineral oil manufactured by Nippon Shinbun Ink K.K. and 30 g of No. 6 Solvent manufactured by Nippon Shinbun Ink K.K. were weighed and put into a vessel (diameter: 11 cm, height: 18.5 cm). This varnish was stirred for 1 hour by a homomixer (type: "TK AUTO HOMOMIXER SL10A"), manufactured by Tokushu Rika Kogyo K.K. at 5000 rpm to obtain a varnish for news ink.

50 g of carbon black "CF9" manufactured by Mitsubishi Chemical corporation was put into a SUS304 mold (inner size: 70 mm $\times$ 70 mm, height: 40mm) manufactured by Mitsubishi Kasei Engineering K.K. and set on a 37 ton four columnar single acting hydraulic press (ram diameter: 152.4 mm) manufactured by Oji Kikai Kogyo K.K. Press molding was carried out at a molding pressure of 0.73 mPa (7.4 kgf/cm$^2$) to obtain a molded product of carbon black. The density of the molded product (the value obtained by dividing the mass of the molded product by the volume of the molded product) was measured and found to be 0.530 g/cm$^3$.

114 g of the above molded product of carbon black was added to the varnish for news ink prepared as described above, and the mixture was stirred for 120 minutes at 5000 rpm to obtain a news ink. This news ink was kneaded by a roll mill (model: "BR-500") manufactured by Asada Tekkosho K.K. After kneading, the size of non-dispersed block carbon black was measured. The measurement was carried out by measuring the size of non-dispersed block carbon black within a range of from 50 to 100 μm by a grined gauge (model: "SKS-3") manufactured by Toyo Seiki Seisakusho K.K. or of non-dispersed block carbon black within a range of from 0 to 50 μm by a grined gauge (model: "R1110") manufactured by Kabushiki Kaisha Kamishima Seisakusho. If the size of non-dispersed block carbon black was larger than 10 μm, the carbon black was again passed through the roll mill. As a result, the maximum particle size was 37 μm as a result of the first measurement, 24 μm as a result of the second measurement and 9 μm as a result of the third measurement.

Further, the ink with which the result of measurement became less than 10 μm, was aged at room temperature for 1 week. Using this aged ink, drawdown tests were carried out by printing and knife spreading. 0.6 cm$^3$ of the ink was sampled and 5 sheets of groundwood paper of A4 size were printed (printing area: 198 mm $\times$ 192 mm) by an offset printing machine manufactured by Toyo Seiki. The printed first and fifth sheets were subjected to color difference measurement by a SM color computer manufactured by Suga Shikenki K.K. to determine the L value, the a value and the b value. As a result, the L value of the first sheet was 25.9, and the L value of the fifth sheet was 37.8. Further, this aged ink and the ink prepared by the following Comparative Example 1 were respectively sampled, whereupon knife spreading of the inks was carried out by means of an ointment knife. The gloss and blackness of the spread inks were visually evaluated. At that time, the gloss and blackness of the knife spread product of the ink prepared in Comparative Example 1 were taken as a reference of 10 points. As a result, both the gloss and blackness of the aged ink were 10, and there was no difference from the ink of Comparative Example 1.

EXAMPLE 8

The experiment was carried out in the same manner as in Example 7 except that the molding pressure of "CF9" was changed to 15.88 mPa (162 kgf/cm$^2$), whereby the density of the molded product thereby obtained was 0.788 g/cm$^3$.

As a result, the grined gauge test results were such that the result of the first measurement was 51 μm, the result of the second measurement was 35 μm, the result of the third measurement was 16 μm and the result of the fourth measurement was 7 μm.

As a result of the drawdown tests, the L value of the first sheet in the printing test was 26.3, and the L value of the fifth sheet was 38.5. Further, in the knife spreading test, blackness was 10, and gloss was 10. As a result of the drawdown tests, there was no difference from the ink of Comparative Example 8.

EXAMPLE 9

The experiment was carried out in the same manner as in Example 7 except that carbon black "CF31" manufactured by Mitsubishi Chemical Corporation was used, and the molding pressure was changed to 1.82 mPa (18.6 kgf/cm$^2$), whereby the density of the molded product thereby obtained was 0.432 g/cm$^3$.

As a result, the grined gauge test results were such that the result of the first measurement was 9 μm, and the result of the second measurement was 7 μm.

As a result of the drawdown tests, the L value of the first sheet in the printing test was 22.8, and the L value of the fifth sheet was 34.0. Further, in the knife spreading test, blackness was 10, and gloss was 10. As a result of the drawdown tests, there was no difference from the ink of Comparative Example 9.

EXAMPLE 10

The experiment was carried out in the same manner as in Example 7 except that the molding pressure of "CF31" was changed to 36.46 mPa (372 kgf/cm$^2$), whereby the density of the molded product obtained was 0.531 g/cm$^3$.
As a result, the grined gauge test results were such that the result of the first measurement was 13 μm, the result of the second measurement was 10 μm, and the result of the third measurement was 7 μm.
As a result of the drawdown tests, the L value of the first sheet in the printing test was 22.6, and the L value of the fifth sheet was 33.9. Further, in the knife spreading test, blackness was 10, and gloss was 10+. As a result of the drawdown tests, there was no difference from the ink of Comparative Example 10.

EXAMPLE 11

380 g of varnish "MS-800" manufactured by Showa Varnish K.K., 20 g of varnish "F104" manufactured by Showa Varnish K.K. and 75 g of "No. 6 Solvent" manufactured by Nippon Sekiyu K.K. were weighed and put into a vessel (diameter: 11 cm, height: 18.5 cm). This varnish was stirred for 1 hour at 5000 rpm by a homomixer (mode: "TK AUTO HOMOMIXER SL-10A") manufactured by Tokushu Rika Kogyo K.K. to obtain a varnish for commercial offset ink.
Press molding was carried out in the same manner as in Example 7 except that carbon black "MA7" manufactured by Mitsubishi Chemical Corporation was used instead of carbon black "CF9" manufactured by Mitsubishi Chemical Corporation, and the density of the molded product was measured and found to be 0.518 g/cm$^3$.
114 g of the above molded product of carbon black was added to the varnish for a news ink prepared as described above, and the mixture was stirred for 120 minutes at 5000 rpm to obtain a news ink.
This news ink was kneaded by a roll mill (model: "BR-500") manufactured by Asada Tekkosho K.K. After the kneading, the size of non-dispersed block carbon black within a range of from 50 to 100 μm was measured by a grined gauge (model: "SKS-3") manufactured by Toyo Seiki Seisakusho K.K. or within a range of from 0 to 50 μm by a grined gauge (model: "R1110") manufactured by Kabushiki Kaisha Kamishima Seisakusho. If the size of non-dispersed block carbon black was larger than 10 μm, it was again passed through the roll mill. As a result, the maximum particle size was 18 μm as a result of the first measurement, 15 μm as a result of the second measurement and 7 μm as a result of the third measurement.

EXAMPLE 12

The experiment was carried out in the same manner as in Example 11 except that the molding pressure of "MA7" was changed to 14.6 mPa (149 kgf/cm$^2$), whereby the density of the molded product obtained was 0.748 g/cm$^3$.
As a result, the grined gauge test results were such that the result of the first measurement was 40 μm, and the result of the second measurement was 7 μm.

COMPARATIVE EXAMPLE 7

An ink was prepared and the experiment was carried out in the same manner as in Example 7 except that non-granulated product of carbon black "CF9" (bulk density: 0.250 g/cm$^3$) manufactured by Mitsubishi Chemical Corporation was used by itself without molding.
As a result, the grined gauge test results were such that the result of the first measurement was 48 μm, the result of the second measurement was 37 μm, the result of the third measurement was 32 μm, the result of the fourth measurement was 30 μm, the result of the fifth measurement was 19 μm, and the result of the sixth measurement was 9 μm. As compared with Example 7 wherein the particle size became less than 10 μm in the third measurement, six times of kneading was required.
As a result of drawdown tests, the L value of the first sheet in the printing test was 26.0, and the L value of the fifth sheet was 37.4. Further, in the knife spreading test, blackness was 10, and gloss was 10. As a result of the drawdown tests, there was no difference from the ink of Example 7.

COMPARATIVE EXAMPLE 8

An ink was prepared and the experiment was carried out in the same manner as in Example 7 except that a granulated product of carbon black "CF9B" (bulk density: 0.423 g/cm$^3$) manufactured by Mitsubishi Chemical Corporation was used by itself without molding.
As a result, the grined gauge test results were such that the result of the first measurement was 62 μm, the result of the second measurement was 46 μm, the result of the third measurement was 38 μm, the result of the fourth measurement 15 μm, and the result of the fifth measurement was 7 μm. As compared with Example 8 wherein the size became less than 10 µm in the fourth measurement, 5 times of kneading was required.

As a result of drawdown tests, the L value of the first sheet in the printing test was 25.4, and the L value of the fifth sheet was 37.7. Further, in the knife spreading test, blackness was 10, and gloss was 10. As a result of the drawdown tests, there was no difference from the ink of Example 8.

COMPARATIVE EXAMPLE 9

An ink was prepared and the experiment was carried out in the same manner as in Example 7 except that a non-granulated product of carbon black "CF31" (bulk density: 0.136 g/cm$^3$) manufactured by Mitsubishi Chemical Corporation was used by itself without molding.

As a result, the grined gauge test results were such that the result of the first measurement was 25 µm, the result of the second measurement was 13 µm, and the result of the third measurement was 7 µm. As compared with Example 9 wherein the size became less than 10 µm in the first measurement, 3 times of kneading was required.

As a result of drawdown tests, the L value of the first sheet in the printing test was 22.8, and the L value of the fifth sheet was 33.9. Further, in the knife spreading test, blackness was 10, and gloss was 10. As a result of the drawdown tests, there was no difference from the ink of Example 9.

COMPARATIVE EXAMPLE 10

An oil-added granulated product of carbon black "OCF31B" (bulk density: 0.272 g/cm$^3$) manufactured by Mitsubishi Chemical Corporation was used as a pigment by itself without molding. "OCF31B" contains 5 wt% of oil. Accordingly, carbon black was increased from 114 g to 120 g. Further, for the same reason, the mineral oil in the varnish was reduced from 90 g to 84 g. In the same manner as in Example 7 except for these, an ink having the same carbon content as in Example 7 was prepared. the subsequent experiment was carried out in the same manner as in Example 7.

As a result, the grined gauge test results were such that the result of the first measurement was 81 µm, the result of the second measurement was 11 µm, and the result of the third measurement was 7 µm.

As compared with Example 10 wherein the size became less than 10 µm in the second measurement, 3 times of kneading was required.

As a result of drawdown tests, the L value of the first sheet in the printing test was 23.8, and the L value of the fifth sheet was 34.5. Further, in the knife spreading test, blackness was 10, and gloss was 10. As a result of the drawdown tests, there was no difference from the ink of Example 10.

COMPARATIVE EXAMPLE 11

An ink was prepared and the experiment was carried out in the same manner as in Example 11 except that a non-granulated product of carbon black "MA7" (bulk density: 0.220 g/cm$^3$) manufactured by Mitsubishi Chemical Corporation was used by itself without molding.

As a result, the grined gauge test results were such that the result of the first measurement was 33 µm, the result of the second measurement was 25 µm, the result of the third measurement was 22 µm, the result of the fourth measurement was 16 µm, the result of the fifth measurement was 10 µm, and the result of the sixth measurement was 8 µm.

As compared with Example 11 wherein the size became less than 10 µm in the third measurement, 6 times of kneading was required.

COMPARATIVE EXAMPLE 12

An ink was prepared and the experiment was carried out in the same manner as in Example 11 except that a granulated product of carbon black "MA7B" (bulk density: 0.400 g/cm$^3$) manufactured by Mitsubishi Chemical Corporation was used by itself without molding.

As a result, the grined gauge test results were such that the result of the first measurement was 100 µm, the result of the second measurement was 68 µm, the result of the third measurement was 18 µm, the result of the fourth measurement was 15 µm, the result of the fifth measurement was 10 µm, and the result of the sixth measurement was 7 µm.

As compared with Example 12 wherein the size became less than 10 µm in the second measurement, 6 times of kneading was required.

The results of Examples are shown in Table 8, and the results of Comparative Examples are shown in Table 9. Further, the results of the drawdown tests are shown in Table 10.

Application to a resin Examples 13 to 27

EXAMPLE 13

(1) Preparation of a molded product

1 kg of carbon black #45 (bulk density: 0.218 g/cm$^3$) manufactured by Mitsubishi Chemical Corporation was put into a carbon steel mold (internal size: 150 mm x 150 mm, height: 360 mm) manufactured by Yuken K.K., and set in a 20 ton hydraulic press manufactured by Yuken K.K. Press molding was carried out at a molding pressure of 3.92 mPa (40 kgf/cm$^2$), whereupon the bulk density of the molded product was measured and found to be 0.761 g/cm$^3$.
This molded product of carbon black was crushed and classified by standard sieves of 100 mesh (150 μm), 60 mesh (250 μm), 30 mesh (500 μm), 16 mesh (1 mm) and 8.6 mesh (2 mm).

(2) Preparation of a colored resin

Into a Banbury mixer (B-250 Model) manufactured by Toyo Seiki Seisakusho K.K., 114.21 g of ABS resin (Sunlex SAN-C) manufactured by Mitsubishi Chemical Corporation, 1.14 g of an age resistor (Irganox 1010) manufactured by Ciba-Geigy AG, 1.14 g of calcium stearate and 77.66 g of the carbon black as disclosed in the previous paragraph, which was pulverized and classified to have a size of from 1 to 2 mm, were charged. Setting the mixture temperature at 165°C, kneading was carried out for 12 minutes to obtain a master batch having a carbon black concentration of 40 wt%.
To 2.5 g of this 40% master batch, 97.5 g of ABS resin (Toughlex 450) manufactured by Mitsubishi Chemical Corporation was added, and the mixture was kneaded for 10 minutes by a twin-roll mill (No. 191-TM Model) manufactured by Yasuda Seiki Seisakusho K.K. set at 150°C to obtain a colored resin sample.
The colored resin sample was formed into a sheet having a thickness of 0.3 mm, from which a specimen of $3 \times 3$ mm was cut out. A slide glass was placed on a hot plate set at 240°C. The specimen cut out in a size of $3 \times 3$ mm was placed on the slide glass and sandwiched by placing another slide glass thereon. A load was exerted for 10 minutes to stretch the specimen.

(3) Measurement of dispersibility

With respect to the stretched sample, areas of particles having a diameter of at least 7 μm were counted by means of an image treating apparatus (MKSIPS-1000) manufactured by Mitsubishi Chemical Corporation. From the inspected field area and the total area of particles having a particle size of at least 7 μm, a dispersion index was calculated in accordance with the following formula.

$$\text{Dispersion index} = \text{total area of coarse particles/}$$

$$\text{inspected field area} \times 100000$$

As a result, the dispersion index was 1336.

EXAMPLE 14

A dispersion index was measured in the same manner as in Example 13 except that the particle size of carbon black was changed to a level of from 500 μm to 1 mm. As a result, the dispersion index was 1884.

EXAMPLE 15

A dispersion index was measured in the same manner as in Example 13 except that the particle size of carbon black was changed to a level of from 250 μm to 500 μm. As a result, the dispersion index was 1113.

EXAMPLE 16

A dispersion index was measured in the same manner as in Example 13 except that the particle size of carbon black was changed to a level of from 150 μm to 250 μm. As a result, the dispersion index was 1268.

EXAMPLE 17

1 kg of carbon black #45 (bulk density: 0.218 g/cm$^3$) manufactured by Mitsubishi Chemical Corporation was put in a carbon steel mold (inner size: 150 mm × 150 mm, height: 360 mm) manufactured by Yuken K.K., and set in a 20 ton hydraulic pressing machine manufactured by Yuken K.K. Press molding was carried out at a molding pressure of 8.6 mPa (88 kgf/cm$^2$), whereupon the bulk density of the molded product was measured and found to be 0.850 g/cm$^3$. This molded product of carbon black was crushed and classified to obtain particles of from 1 to 2 mm. Using the particles, a dispersion index was measured in the same manner as in Example 13. As a result, the dispersion index was 1157.

EXAMPLE 18

A dispersion index was measured in the same manner as in Example 17 except that the particle size of carbon black was changed to a level of from 500 μm to 1 mm. As a result, the dispersion index was 1520.

EXAMPLE 19

A dispersion index was measured in the same manner as in Example 17 except that the particle size of carbon black was changed to a level of from 250 μm to 500 μm. As a result, the dispersion index was 1520.

EXAMPLE 20

A dispersion index was measured in the same manner as in Example 17 except that the particle size of carbon black was changed to a level of from 150 μm to 250 μm. As a result, the dispersion index was 1478.

EXAMPLE 21

(1) Preparation of a molded product

In the same manner as in Example 13, a molded product of carbon black was prepared, crushed and classified.

(2) Preparation of a colored resin

Into a Banbury mixer (B-250 Model) manufactured by Toyo Seiki Seisakusho K.K., 101.49 g of a low density polyethylene resin (LF440HA) manufactured by Mitsubishi Chemical Corporation, 0.87 g of an age resistor (Irganox 1010) manufactured by Chiba-Geigy AG, 1.39 g of calcium stearate and 69.44 g of the carbon black disclosed in the previous paragraph, which was pulverized and classified to have a size of from 1 to 2 mm, were charged.
Setting the mixer temperature at 115°C, kneading was carried out for 7 minutes to obtain a master batch having a carbon black concentration of 40 wt%. To 1.5 g of this 40% master batch, 58.3 g of a low density polyethylene resin (F120) manufactured by Mitsubishi Chemical Corporation was added, and the mixture was kneaded for 10 minutes by a twin-roll mill (No. 191-TM Model) manufactured by Yasuda Seiki Seisakusho K.K. set at 130°C to obtain a colored resin sample.
The colored resin sample was formed into a sheet having a thickness of 0.3 mm, and a specimen of 3 × 3 mm was cut out. A slide glass was put on a hot plate set at 240°C. Then, the specimen cut out in a size of 3 × 3 mm was placed on the slide glass and sandwiched by placing another slide glass thereon. A load was exerted for 10 minutes to stretch the specimen.

(3) Measurement of dispersibility

Measurement was carried out in the same manner as in Example 13. As a result, the dispersion index was 334.

EXAMPLE 22

A dispersion index was measured in the same manner as in Example 21 except that the particle size of carbon black was changed to a level of from 500 μm to 1 mm. As a result, the dispersion index was 347.

EXAMPLE 23

A dispersion index was measured in the same manner as in Example 21 except that the particle size of carbon black was changed to a level of from 250 μm to 500 μm. As a result, the dispersion index was 327.

EXAMPLE 24

A dispersion index was measured in the same manner as in Example 13 except that the particle size of carbon black was changed to a level of from 150 μm to 25 μm. As a result, the dispersion index was 341.

EXAMPLE 25

1 kg of carbon black #45 (bulk density: 0.218 g/cm$^3$) manufactured by Mitsubishi Chemical Corporation was put into a carbon steel mold (inner size: 150 mm $\times$ 150 mm, height: 360 mm) manufactured by Yuken K.K. and set in a 20 ton hydraulic pressing machine manufactured by Yuken K.K. Press molding was carried out at a molding temperature of 8.6 mPa (88 kgf/cm$^2$), whereupon the bulk density of the molded product was measured and found to be 0.850 g/cm$^3$. This molded product of carbon black was crushed and classified to obtain particles of from 1 to 2 mm. Using the particles, a dispersion index was measured in the same manner as in Example 1. As a result, the dispersion index was 242.

EXAMPLE 26

A dispersion index was measured in the same manner as in Example 25 except that the particle size of carbon black was changed to a level of from 500 μm to 1 mm. As a result, the dispersion index was 405.

EXAMPLE 27

A dispersion index was measured in the same manner as in Example 25 except that the particle size of carbon black was changed to a level of from 250 μm to 500 μm. As a result, the dispersion index was 446.

COMPARATIVE EXAMPLE 13

A dry system granulated product #45B manufactured by Mitsubishi Chemical Corporation was classified to have a size of from 1 to 2 mm. Using the particles, a dispersion index was measured in the same manner as in Example 13. As a result, the dispersion index was 1739.

COMPARATIVE EXAMPLE 14

A dry system granulated product #45B manufactured by Mitsubishi Chemical Corporation was crushed and classified to have a size of from 500 μm to 1 mm. Using the particles, a dispersion index was measured in the same manner as in Example 14. As a result, the dispersion index was 1676.

COMPARATIVE EXAMPLE 15

A dry system granulated product #45B manufactured by Mitsubishi Chemical Corporation was crushed and classified to have a size of from 250 μm to 500 μm. Using the particles, a dispersion index was measured in the same manner as in Example 15. As a result, the dispersion index was 1953.

COMPARATIVE EXAMPLE 16

A dry system granulated product #45B manufactured by Mitsubishi Chemical Corporation was crushed and classified to have a size of from 150 μm to 250 μm. Using the particles, a dispersion index was measured in the same manner as in Example 16. As a result, the dispersion index was 2110.

COMPARATIVE EXAMPLE 17

A dry system granulated product #45B manufactured by Mitsubishi Chemical Corporation was classified to have a size of from 1 mm to 2 mm. Using the particles, a dispersion index was measured in the same manner as in Example 17. As a result, the dispersion index was 553.

COMPARATIVE EXAMPLE 18

A dry system granulated product #45B manufactured by Mitsubishi Chemical Corporation was crushed and classified to have a size of from 500 μm to 1 mm. Using the particles, a dispersion index was measured in the same manner as in Example 18. As a result, the dispersion index was 630.

COMPARATIVE EXAMPLE 19

A dry system granulated product #45B manufactured by Mitsubishi Chemical Corporation was crushed and classified to have a size of from 250 μm to 500 μm. Using the particles, a dispersion index was measured in the same manner as in Example 19. As a result, the dispersion index was 646.

COMPARATIVE EXAMPLE 20

A dry system granulated product #45B manufactured by Mitsubishi Chemical Corporation was crushed and classified to have a size of from 150 μm to 250 μm. Using the particles, a dispersion index was measured in the same manner as in Example 20. As a result, the dispersion index was 734.

COMPARATIVE EXAMPLE 21

A wet system granulated product #45BW manufactured by Mitsubishi Chemical Corporation was classified to have a size of from 1 mm to 2 mm. Using the particles, a dispersion index was measured in the same manner as in Example 21. As a result, the dispersion index was 2141.

COMPARATIVE EXAMPLE 22

A wet system granulated product #45BW manufactured by Mitsubishi Chemical Corporation was crushed and classified to have a size of from 500 μm to 1 mm. Using the particles, a dispersion index was measured in the same manner as in Example 22. As a result, the dispersion index was 2086.

COMPARATIVE EXAMPLE 23

A wet system granulated product #45BW manufactured by Mitsubishi Chemical Corporation was crushed and classified to have a size of from 250 μm to 500 μm. Using the particles, a dispersion index was measured in the same manner as in Example 23. As a result, the dispersion index was 2168.

COMPARATIVE EXAMPLE 24

A wet system granulated product #45BW manufactured by Mitsubishi Chemical Corporation was crushed and classified to have a size of from 150 μm to 250 μm.
Using the particles, a dispersion index was measured in the same manner as in Example 22. As a result, the dispersion index was 2307.

COMPARATIVE EXAMPLE 25

A wet system granulated product #45BW manufactured by Mitsubishi Chemical Corporation was classified to have a size of from 1 mm to 2 mm. Using the particles, a dispersion index was measured in the same manner as in Example 25. As a result, the dispersion index was 541.

COMPARATIVE EXAMPLE 26

A wet system granulated product #45BW manufactured by Mitsubishi Chemical Corporation was crushed and classified to have a size of from 500 μm to 1 mm. Using the particles, a dispersion index was measured in the same manner as in Example 26. As a result, the dispersion index was 584.

COMPARATIVE EXAMPLE 27

A wet system granulated product #45BW manufactured by Mitsubishi Chemical Corporation was crushed and classified to have a size of from 250 μm to 500 μm. Using the particles, a dispersion index was measured in the same manner as in Example 27. As a result, the dispersion index was 584.

The results of Examples 13 to 27 and Comparative Examples 13 to 27 are summarized in Table 11.

Application to a coating material Examples 28 to 35

In the following Examples, dispersibility of carbon black in a black coating material prepared for evaluation of Examples and Comparative Examples, and blackness and gloss of a coating film, were evaluated.

With respect to dispersibility of carbon black, a coating material dispersed by a paint shaker for a predetermined period of time was subjected to the grined gauge measurement, and the measured value was taken as an index for dispersibility.

The grined gauge measurement is as follows. "The grined gauge is the one having two grooves engraved on a steel plate so that the depth varies from 0 to $25 \times 10^{-6}$ m, and an ink is placed at the deepest portion and stretched towards a shallow side by a scraper, whereupon the particle size is determined from the gradation at the position of striae formed at a portion shallower than the diameters of coarse particles." ("Coloring Material Engineering Handbook", p. 1052-1053, published by Asakura shoten)

With respect to blackness of a coating film, a method by a color difference meter and a method by visual observation were used. Evaluation of blackness by a color difference meter was carried out by measuring the L value (brightness index) of a Hunter color difference formula in JIS Z8730-1980 (method for representing a color difference), whereupon a sample with a smaller L value was judged to have a higher degree of blackness.

Measurement of blackness by visual observation was carried out as follows. A coating material prepared by an Example and a coating material prepared in an Comparative Example were placed side by side on a polyethylene terephthalate (PET) film and stretched towards this side by a bar coater to form coating films having a thickness corresponding to the setting of the bar coater. The PET film coated with these coating materials was subjected to baking for 20 minutes in an air circulating dryer set at 120°C. Using the blackness of the coating material of the Comparative Example as a reference of 10 points, the blackness of the coating material of the Example was compared relative thereto and represented by a numerical value, so that a sample with a higher degree of blackness is given a larger numerical value.

Gloss was measured by visual observation. A coating film prepared for measuring the above blackness was inclined at an angle of about 60°, and the degree of reflection of light was visually measured. Using the coating material prepared in the Comparative Example as a reference of 10 points, the gloss of the coating film of the Example was compared thereto and represented by a numerical value, so that a sample having higher gloss is given a larger numerical value.

Tinting strength was determined as follows.

A prepared black coating material and a white coating material were mixed and coated on a PET film, followed by baking to obtain a coating film, the L value of which was measured by a color difference meter, whereupon a coating material having a smaller L value was judged to have a higher tinting strength.

EXAMPLE 28

30 g of carbon black #2650 manufactured by Mitsubishi Chemical Corporation was put into a SUS304 mold (inner size: 70 mm × 70 mm, height: 40 mm) manufactured by Mitsubishi Kasei Engineering K.K., and set in a 37 ton four columnar single acting hydraulic press (ram diameter: 152.4 mm) manufactured by Oji Kikai Kogyo K.K. Press molding was carried out at a molding pressure of 0.18 mPa (1.9 kgf/cm$^2$), whereupon the bulk density of the molded product was measured and found to be 0.266 g/cm$^3$.

90 g of glass beads having a diameter of from 2.5 to 3.5 mm, manufactured by Tokyo Glass K.K. were put into a mayonnaise bottle of 140 cm$^3$. Then, 16 g of a melamine alkyd resin varnish (Amylak 1026) manufactured by Kansai Paint K.K., 10 g of Amylak Thinner manufactured by Kansai Paint K.K. and 3 g of the molded product of carbon black were weighed and put into the bottle.

This mayonnaise bottle was set on a single type paint shaker (RC-5000A) manufactured by Red Devil Co. and shaked for 15 minutes. This black varnish was cooled to room temperature, and then the size of non-dispersed block carbon black within a range of from 0 to 50 μm was measured by a grined gauge (model: R1110) manufactured by Kabushiki Kaisha Kamishima Seisakusho. The result of measurement by the grined gauge was 15 μm.

Further, 50 g of Amylak 1026 Clear was put into this mayonnaise bottle, followed by mixing for 10 minutes by the paint shaker to obtain a black coating material.

A part of the black coating material was sampled (about 1 cm$^3$), and the coating material of Example 1 and the coating material of Comparative Example 1 were put on a PET film (Trancee G, thickness: 180 µm) manufactured by Fuji Film Co., Ltd. with a distance of about 5 cm and stretched by a bar coater (No. 24) manufactured by Toyo Seiki K.K. This PET film was subjected to baking for 20 minutes in an air circulating dryer (Automatic Drying Oven SS-200N) manufactured by Ikeda Rika K.K. set at 120°C. The L value of the black coating film thus baked was measured by a color difference meter (Spectro Color Meter SE-2000) manufactured by Nippon Denshoku K.K. The L value was 4.78. Further, using the blackness of the coating material of Comparative Example 1 as a reference of 10 points, the blackness of the sample of the Example was visually evaluated. The blackness was 10+.

Further, using the gloss of the coating material of Comparative Example 1 as a reference of 10 points, the gloss of the sample of the Example was visually evaluated. The evaluation standards were such that "Symbol + or - means that a slight difference is observed, 11 represents slightly good, 12 represents distinctly good, and 13 or higher represents excellent". As a result, the sample of Example 1 was evaluated to be 12.

Then, a sample for evaluating tinting strength was prepared. 40 g of a white coating material (Amylak 1531 White) manufactured by Kansai Paint K.K. was put into a 140 cc mayonnaise bottle. Then, 8 g of the black coating material prepared as described above was put thereinto, followed by mixing for 21 minutes (7 minutes × 3 times) by a paint shaker manufactured by Red Devil Co. to obtain a sample for evaluating tinting strength. Using this sample, a coating film was prepared on a PET film in the same manner as for the black coating material, and the L value was measured by a color difference meter manufactured by Nippon Denshoku K.K. The L value was 44.9.

EXAMPLE 29

The same operation as in Example 28 was carried out except that the shaking time by the paint shaker was changed to 30 minutes. The measured value by the grined gauge was 9 µm, the L value of the black coating material was 4.68, the blackness by visual observation was 10+, the gloss by visual observation was 11+, and the L value of the sample for evaluating tinting strength was 41.7.

EXAMPLE 30

The same operation as in Example 28 was carried out except that the shaking time by the paint shaker was changed to 1 hour. The measured value by the grined gauge was 7.5 µm, the L value of the black coating material was 4.48, the blackness by visual observation was 11-, the gloss by visual observation was 12+, and the L value of the sample for evaluating tinting strength was 39.5.

EXAMPLE 31

The same operation as in Example 28 was carried out except that the shaking time by the paint shaker was changed to 2 hours. The measured value by the grined gauge was 7.5 µm, the L value of the black coating material was 4.23, the blackness by visual observation was 10+, the gloss by visual observation was 10+, and the L value of the sample for evaluating tinting strength was 39.6.

EXAMPLE 32

The same operation as in Example 28 was carried out except that the molding pressure was changed to 36.5 mPa (372 kgf/cm$^2$). As a result, the bulk density of the molded product was 0.842 g/cm$^3$. Further, a coating material prepared by using this molded product of carbon black, was subjected to measurements, whereby the measured value of the grined gauge was 15 µm, the L value of the black coating material was 4.13, the blackness by visual observation was 11-, the gloss by visual observation was 15, and the L value of the sample for evaluating tinting strength was 39.7.

EXAMPLE 33

The same operation as in Example 32 was carried out except that the shaking time by the paint shaker was changed to 30 minutes. The measured value by the grined gauge was 7.5 µm, the L value of the black coating material was 4.33, the blackness by visual observation was 11, the gloss by visual observation was 12, and the L value of the sample for evaluating tinting strength was 39.0.

EXAMPLE 34

The same operation as in Example 32 was carried out except that the shaking time by the paint shaker was changed to 1 hour. The measured value by the grined gauge was 7.5 μm, the L value of the black coating material was 4.19, the blackness by visual observation was 13, the gloss by visual observation was 13, and the L value of the sample for evaluating tinting strength was 38.3.

EXAMPLE 35

The same operation as in Example 32 was carried out except that the shaking time by the paint shaker was changed to 2 hours. The measured value by the grined gauge was 8.0 μm, the L value of the black coating material was 3.96, the blackness by visual observation was 12, the gloss by visual observation was 11, and the L value of the sample for evaluating tinting strength was 38.3.

COMPARATIVE EXAMPLE 28

The same operation as in Example 28 was carried out except that instead of the molded product of carbon black used in Example 28, carbon black #2650 (bulk density: 0.077 g/cm$^3$) manufactured by Mitsubishi Chemical Corporation was used. The measured value by the grined gauge was 17 μm, the L value of the black coating material was 4.83, and the L value of the sample for evaluating tinting strength was 45.8. The blackness and gloss by visual observation were used as standard references of 10 points.

COMPARATIVE EXAMPLE 29

The same operation as in Example 29 was carried out except that instead of the molded product of carbon black used in Example 29, carbon black #2650 (bulk density: 0.077 g/cm$^3$) manufactured by Mitsubishi Chemical Corporation was used. The measured value by the grined gauge was 10 μm, the L value of the black coating material was 4.76, and the L value of the sample for evaluating tinting strength was 41.9. The blackness and gloss by visual observation were used as standard references of 10 points.

COMPARATIVE EXAMPLE 30

The same operation as in Example 30 was carried out except that instead of the molded product of carbon black used in Example 30, carbon black #2650 (bulk density: 0.077 g/cm$^3$) manufactured by Mitsubishi Chemical Corporation was used. The measured value by the grined gauge was 7.5 μm, the L value of the black coating material was 4.50, and the L value of the sample for evaluating tinting strength was 39.7. The blackness and gloss by visual observation were used as standard references of 10 points.

COMPARATIVE EXAMPLE 31

The same operation as in Example 31 was carried out except that instead of the molded product of carbon black used in Example 31, carbon black #2650 (bulk density: 0.077 g/cm$^3$) manufactured by Mitsubishi Chemical Corporation was used. The measured value by the grined gauge was 8.0 μm, the L value of the black coating material was 4.23, and the L value of the sample for evaluating tinting strength was 39.7. The blackness and gloss by visual observation were used as standard references of 10 points.

COMPARATIVE EXAMPLE 32

The same operation as in Example 32 was carried out except that instead of the molded product of carbon black used in Example 32, a dry system granulated product of carbon black #2650B (bulk density: 0.463 g/cm$^3$) manufactured by Mitsubishi Chemical Corporation was used. The measured value by the grined gauge was 19 μm, the L value of the black coating material was 4.35, and the L value of the sample for evaluating tinting strength was 43.4.

COMPARATIVE EXAMPLE 33

The same operation as in Example 33 was carried out except that instead of the molded product of carbon black used in Example 33, a dry system granulated product of carbon black #2650B (bulk density: 0.463 g/cm$^3$) manufactured by Mitsubishi Chemical Corporation was used. The measured value by the grined gauge was 7.5 μm, the L value of the black coating material was 4.46, and the L value of the sample for evaluating tinting strength was 40.4. The blackness and gloss by visual observation were used as standard references of 10 points.

COMPARATIVE EXAMPLE 34

The same operation as in Example 34 was carried out except that instead of the molded product of carbon black used in Example 34, a dry system granulated product of carbon black #2650B (bulk density: 0.463 g/cm$^3$) manufactured by Mitsubishi Chemical Corporation was used. The measured value by the grined gauge was 7.5 μm, the L value of the black coating material was 4.29, and the L value of the sample for evaluating tinting strength was 38.6. The blackness and gloss by visual observation were used as standard references of 10 points.

COMPARATIVE EXAMPLE 35

The same operation as in Example 35 was carried out except that instead of the molded product of carbon black used in Example 35, a dry system granulated product of carbon black #2650B (bulk density: 0.463 g/cm$^3$) manufactured by Mitsubishi Chemical Corporation was used. The measured value by the grined gauge was 9.0 μm, the L value of the black coating material was 4.01, and the L value of the sample for evaluating tinting strength was 38.6. The blackness and gloss by visual observation were used as standard references of 10 points.

The results of these Examples and Comparative Examples are shown in Table 12.

The blackness, gloss and tinting strength of all samples of Examples 28 to 35 are equal or superior to those of the samples of the corresponding Comparative Examples.

Application to rubber Examples 36 to 38

EXAMPLE 36

500 g of carbon black DIA-I (non-granulated product) (bulk density: 0.169 g/cm$^3$) manufactured by Mitsubishi Chemical Corporation was put into a carbon steel (SS400) mold (inner size: 150 mm × 150 mm, height: 360 mm) manufactured by Yuken K.K., and set in a 20 ton hydraulic press manufactured by Yuken K.K. Press molding was carried out at a molding pressure of 8.7 mPa (88.9 kgf/cm$^2$), whereupon the bulk density of the molded product was measured and found to be 0.522 g/cm$^3$.

This molded product of carbon black was blended with other components in the proportions as identified in Table 13 by a Banbury mixer and an open roll mixer to obtain a rubber composition. Such a rubber composition was subjected to press vulcanization at 160°C to prepare a vulcanized rubber test specimen. Various test were carried out by the following testing methods, and the physical properties were measured.

(1) Loss factor

The loss factor (tanδ) was measured under the following conditions using "DVE Rheospectrer" manufactured by Kabushiki Kaisha Rheology.

Static distortion: 10%, dynamic distortion (amplitude): 2%, frequency: 10 Hz, measuring temperature: 60°C

(2) Heat build-up

The heat build-up was measured under the following conditions using Good Rich Flexometer manufactured by Kabushiki Kaisha Kamishima Seisakusho

Test temperature: 35°C, load: 24 pounds, testing time: 25 minutes

(3) Dispersibility (D%) of reinforcing particles in rubber

This dispersibility was measured in accordance with the method for measuring dispersibility of carbon black i.e. ASTM D2663-B Method (method for counting agglomerates). Namely, a vulcanized rubber was sliced into a thin film by a Sledge type microtome (manufactured by Leitz Co.). Then, the total area occupied by agglomerates of reinforcing particles (carbon black) of at least 5 μm in the blend, was measured by an optical microscope, and the percentage of reinforcing particles dispersed in a size of not larger than 5 μm was obtained from the total cross-sectional area (calculated value) of reinforcing particles added to the blend and taken as the dispersibility (D%).

As a result, the loss factor at 60°C was 0.139, the heat build-up was 31.0°C, and D% was 99.2%. The results are summarized in Table 14.

EXAMPLE 37

A molded product of carbon black was prepared in the same manner as in Example 36 except that the carbon black was changed to DIA-H (non-granulated product) (bulk density: 0.192 g/cm$^3$) manufactured by Mitsubishi Chemical Corporation.

Press molding was carried out at a molding pressure of 8.7 mPa (88.9 kgf/cm$^2$), whereupon the bulk density of the molded product was measured and found to be 0.491 g/cm$^3$. Further, the rubber tests were carried out in the same manner as in Example 36. As a result, the loss factor at 60°C was 0.107, the heat build-up was 26.0°C, and D% was 99.6%.

EXAMPLE 38

A molded product of carbon black was prepared in the same manner as in Example 36 except that the carbon black was changed to DIA-G (non-granulated product) (bulk density: 0.192 g/cm$^3$) manufactured by Mitsubishi Chemical Corporation.

Press molding was carried out at a molding pressure of 8.7 mPa (88.9 kgf/cm$^2$), whereupon the bulk density of the molded product was measured and found to be 0.639 g/cm$^3$.

Further, the rubber tests were carried out in the same manner as in Example 36. As a result, the loss factor at 60°C was 0.058, the heat build-up was 17.0°C, and D% was 99.9%.

COMPARATIVE EXAMPLE 36

The rubber tests were carried out in the same manner as in Example 36 except that the carbon black was changed to DIA-I (beads) (bulk density: 0.351 g/cm$^3$) manufactured by Mitsubishi Chemical Corporation.

As a result, the loss factor at 60°C was 0.152, the heat build-up was 35.0°C, and D% was 95.4%.

COMPARATIVE EXAMPLE 37

The rubber tests were carried out in the same manner as in Example 37 except that the carbon black was changed to DIA-H (beads) (bulk density: 0.352 g/cm$^3$) manufactured by Mitsubishi Chemical Corporation.

As a result, the loss factor at 60°C was 0.123, the heat build-up was 29.0°C, and D% was 97.3%.

COMPARATIVE EXAMPLE 38

The rubber tests were carried out in the same manner as in Example 36 except that the carbon black was changed to DIA-G (beads) (bulk density: 0.445 g/cm$^3$) manufactured by Mitsubishi Chemical Corporation.

As a result, the loss factor at 60°C was 0.065, the heat build-up was 19.0°C, and D% was 98.0%.

DISCUSSION OF THE RESULTS

As is evident from the above Examples and Comparative Examples, the rubber produced by using the press molded product of carbon black of the present invention shows high dispersibility, a low loss factor and a low heat build-up.

Table 1

| Carbon black used in Examples and Comparative Examples | | | | |
|---|---|---|---|---|
| | Product No. | Particle size (nm) | DBP oil absorption (mℓ/100 g) | Bulk density (g/cm$^3$) |
| Carbon blacks manufactured by Mitsubishi Chemical Corporation | #45 | 24 | 53 | 0.270 |
| | #960 | 16 | 71 | 0.175 |
| | #990 | 16 | 113 | 0.081 |
| | #2300 | 15 | 65 | 0.170 |
| | MA8 | 24 | 58 | 0.217 |
| | MA100 | 22 | 100 | 0.180 |

Table 2  #45

| | Molding pressure mPa $(kg/cm^2)$ | Bulk density $(g/cm^3)$ | Bulk density ratio | Ink screen residue (%) | Powdering ratio (%) | Compacting property | Disper-sibility | Overall evaluation |
|---|---|---|---|---|---|---|---|---|
| Comparative Example 1-1 (powder product) | 0 | 0.270 | 1.0 | 12.1 | 100 | × | ○ | × |
| Example 1-2 | 0.7 (7.4) | 0.562 | 2.1 | 11.0 | 8.1 | ○ | ○ | ○ |
| Example 1-3 | 2.6 (26.1) | 0.701 | 2.6 | 18.1 | - | ○ | ○ | ◎ |
| Example 1-4 | 6.4 (65.2) | 0.800 | 3.0 | 37.9 | - | ○ | ○ | ◎ |
| Example 1-5 | 8.7 (89.4) | 0.842 | 3.1 | 51.6 | - | ○ | ○ | ◎ |
| Example 1-6 | 11.6 (119.1) | 0.876 | 3.2 | 63.7 | - | ○ | ○ | ◎ |
| Example 1-7 | 14.6 (148.9) | 0.900 | 3.3 | 67.9 | - | ○ | ○ | ◎ |
| Example 1-8 | 23.8 (241.3) | 1.050 | 3.9 | 74.0 | - | ○ | △ | ○ |
| Comparative Example 1-9 | - | 0.488 | 1.8 | 78.0 | - | △ | × | × |
| Comparative Example 1-10 (reduced pressure-regained pressure product) | Atmospheric pressure | 0.450 | 1.7 | 12.7 | 87.7 | × | ○ | × |

EP 0 945 494 B1

EP 0 945 494 B1

Table 3　#960

| | Molding pressure mPa (kg/cm²) | Bulk density (g/cm³) | Bulk density ratio | Ink screen residue (%) | Compacting property | Disper-sibility | Overall evaluation |
|---|---|---|---|---|---|---|---|
| Comparative Example 2-1 (powder product) | 0 | 0.175 | 1.0 | 0.7 | × | ○ | × |
| Example 2-2 | 0.2 (1.9) | 0.385 | 2.3 | 0.7 | △ | ○ | ○ |
| Example 2-3 | 0.7 (7.4) | 0.473 | 2.7 | 7.8 | ○ | ○ | ○ |
| Example 2-4 | 1.8 (18.6) | 0.593 | 3.4 | 53.9 | ○ | ○ | ◎ |
| Example 2-5 | 4.0 (40.9) | 0.650 | 3.7 | 81.3 | ○ | ○ | ◎ |
| Example 2-6 | 8.8 (90.0) | 0.721 | 4.1 | 90.2 | ○ | ○ | ◎ |
| Example 2-7 | 14.6 (148.9) | 0.850 | 4.9 | 98.0 | ○ | △ | ○ |
| Comparative Example 2-8 | 31.4 (320.0) | 0.990 | 5.6 | 100 | ○ | × | × |
| Comparative Example 2-9 (granulated product) | - | 0.393 | 2.2 | 100 | △ | × | × |

EP 0 945 494 B1

Table 4   #990

| | Molding pressure mPa (kg/cm$^2$) | Bulk density (g/cm$^3$) | Bulk density ratio | Ink screen residue (%) | Powdering ratio (%) | Compacting property | Disper-sibility | Overall evaluation |
|---|---|---|---|---|---|---|---|---|
| Comparative Example 3-1 (powder product) | 0 | 0.081 | 1.0 | 0 | 100 | × | ○ | × |
| Example 3-2 | 0.2 (1.9) | 0.240 | 2.7 | 0.25 | – | △ | ○ | ○ |
| Example 3-3 | 0.7 (7.4) | 0.346 | 3.9 | 6.9 | 17 | ○ | ○ | ◎ |
| Example 3-4 | 7.6 (26.1) | 0.450 | 5.1 | 14.4 | – | ○ | ○ | ◎ |
| Example 3-5 | 5.5 (55.8) | 0.500 | 5.7 | 36.9 | – | ○ | ○ | ◎ |
| Example 3-6 | 10.0 (102.4) | 0.550 | 6.3 | 48.1 | – | ○ | ○ | ◎ |
| Example 3-7 | 18.5 (189.0) | 0.601 | 6.8 | 56.6 | – | ○ | ○ | ◎ |
| Example 3-8 | 23.5 (240.3) | 0.681 | 7.7 | 74.1 | – | ○ | △ | ○ |
| Example 3-9 | 41.0 (418.8) | 0.750 | 8.5 | 77.0 | – | ○ | △ | ○ |
| Comparative Example 3-10 | – | 0.303 | 3.4 | 84.5 | – | △ | × | × |
| Comparative Example 3-11 (reduced pressure-regained pressure product) | Atmos-pheric pressure | 0.212 | 2.4 | 0 | 42 | × | ○ | × |

Table 5  #2300

| | Molding pressure mPa (kg/cm²) | Bulk density (g/cm³) | Bulk density ratio | Ink screen residue (%) | Compacting property | Dispersibility | Overall evaluation |
|---|---|---|---|---|---|---|---|
| Comparative Example 4-1 (powder product) | 0 | 0.170 | 1.0 | 0.3 | × | ○ | × |
| Example 4-2 | 07 (7.4) | 0.433 | 2.5 | 0.3 | △ | ○ | ○ |
| Example 4-3 | 1.8 (18.6) | 0.557 | 3.2 | 7.5 | ○ | ○ | ◎ |
| Example 4-4 | 3.1 (31.6) | 0.734 | 4.3 | 19.8 | ○ | ○ | ◎ |
| Example 4-5 | 5.1 (52.1) | 0.780 | 4.6 | 57.6 | ○ | ○ | ◎ |
| Example 4-6 | 10.0 (102.4) | 0.843 | 5.0 | 88.6 | ○ | ○ | ◎ |
| Example 4-7 | 21.9 (224.0) | 0.915 | 5.4 | 93.4 | ○ | ○ | ◎ |
| Example 4-8 | 49.0 (500.0) | 0.990 | 5.8 | 99.0 | ○ | △ | ○ |
| Comparative Example 4-9 (granulated product) | — | 0.497 | 2.9 | 100 | △ | × | × |

EP 0 945 494 B1

Table 6   MA8

| | Molding pressure mPa (kg/cm²) | Bulk density (g/cm³) | Bulk density ratio | Ink screen residue (%) | Compacting property | Dispersibility | Overall evaluation |
|---|---|---|---|---|---|---|---|
| Comparative Example 5-1 (powder product) | 0 | 0.217 | 1.0 | 0.5 | × | O | × |
| Example 5-2 | 2.1 (22.0) | 0.522 | 2.4 | 0.5 | O | O | O |
| Example 5-3 | 0.7 (7.4) | 0.663 | 3.1 | 6.0 | O | O | ◎ |
| Example 5-4 | 3.6 (37.2) | 0.710 | 3.3 | 22.6 | O | O | ◎ |
| Example 5-5 | 8.2 (84.2) | 0.800 | 3.7 | 40.6 | O | O | ◎ |
| Example 5-6 | 18.6 (190.2) | 0.883 | 4.1 | 70.0 | O | O | O |
| Example 5-7 | 26.9 (274.9) | 0.945 | 4.4 | 79.5 | O | △ | O |
| Comparative Example 5-8 (granulated product) | – | 0.517 | 2.4 | 80.0 | △ | × | × |

Table 7  MA100

| | Molding pressure mPa (kg/cm$^2$) | Bulk density (g/cm$^3$) | Bulk density ratio | Ink screen residue (%) | Compacting property | Dispersibility | Overall evaluation |
|---|---|---|---|---|---|---|---|
| Comparative Example 6-1 (powder product) | 0 | 0.180 | 1.0 | 0.52 | × | ○ | × |
| Example 6-2 | 0.18 (1.86) | 0.345 | 2.0 | 0.50 | △ | ○ | ○ |
| Example 6-3 | 0.7 (7.4) | 0.431 | 2.4 | 1.18 | △ | ○ | ○ |
| Example 6-4 | 1.8 (18.6) | 0.608 | 3.4 | 4.4 | ○ | ○ | ◎ |
| Example 6-5 | 3.6 (37.2) | 0.651 | 3.6 | 9.0 | ○ | ○ | ◎ |
| Example 6-6 | 14.6 (149) | 0.719 | 4.0 | 22.8 | ○ | ○ | ◎ |
| Example 6-7 | 36.4 (372) | 0.804 | 4.5 | 28.1 | ○ | ○ | ◎ |
| Comparative Example 6-8 (granulated product) | – | 0.364 | 2.0 | 56.7 | △ | × | × |

EP 0 945 494 B1

Table 8

| | Brand name | Form | Molding pressure mPa (kgf/cm$^2$) | Bulk density (g/cm$^2$) | Number of times of roll milling required to bring the size to less than 10 μm (times) |
|---|---|---|---|---|---|
| | | | | Examples | |
| Example 7 | CF9 | Molded product | 0.7 (7.4) | 0.530 | 3 |
| Example 8 | CF9 | Molded product | 15.9 (162) | 0.766 | 4 |
| Example 9 | CF31 | Molded product | 1.8 (18.6) | 0.437 | 1 |
| Example 10 | CF31 | Molded product | 36.5 (372) | 0.531 | 2 |
| example 11 | MA7 | Molded product | 0.7 (7.4) | 0.518 | 3 |
| Example 12 | MA7 | Molded product | 14.6 (149) | 0.748 | 2 |

Table 9

| | Brand name | Form | Bulk density (g/cm$^3$) | Number of times of roll milling required to bring the size to less than 10 μm (times) |
|---|---|---|---|---|
| | | | Comparative Examples | |
| Comparative Example 7 | CF9 | Non-granulated product | 0.250 | 7 |
| Comparative Example 8 | CF9B | Dry system granulated product | 0.423 | 5 |
| Comparative Example 9 | CF31 | Non-granulated product | 0.136 | 3 |
| Comparative Example 10 | OCF31 | Oil-added granulated product | 0.273 | 3 |
| Comparative example 11 | MA7 | Non-granulated product | 0.220 | 6 |
| Comparative Example 12 | MA7B | Dry system granulated product | 0.400 | 5 |

Table 10  Drawdown tests of inks employing the molded products

| | Brand name | Printing by manual printing machine | | | | | | Knife spreading | |
|---|---|---|---|---|---|---|---|---|---|
| | | 1st sheet | | | 5th sheet | | | | |
| | | L | a | b | L | a | b | Blackness | Gloss |
| Example 7 | CF9 | 25.9 | 0.51 | 2.39 | 37.8 | 0.50 | 3.57 | 10 | 10- |
| Comparative Example 7 | CF9 | 26.0 | 0.63 | 2.69 | 37.4 | 0.39 | 3.50 | 10 | 10 |
| Example 8 | CF9 | 25.4 | 0.45 | 2.32 | 37.7 | 0.44 | 3.75 | 10 | 10 |
| Comparative Example 8 | CF9 | 26.3 | 0.47 | 2.28 | 38.5 | 0.45 | 3.61 | 10 | 10 |
| Example 9 | CF31 | 22.8 | 0.22 | 1.57 | 34.0 | 0.23 | 2.77 | 10 | 10 |
| Comparative Example 9 | CF31 | 22.8 | 0.12 | 1.56 | 33.9 | 0.24 | 2.89 | 10 | 10 |
| Example 10 | CF31 | 22.6 | 0.26 | 1.61 | 33.9 | 0.30 | 2.94 | 10 | 10+ |
| Comparative Example 10 | CF31 | 23.8 | 0.26 | 1.73 | 34.5 | 0.32 | 3.05 | 10 | 10 |

Table 11 Examples and Comparative Examples

| | Brand name | Form | Molding pressure mPa (kg/cm²) | Bulk density (g/cm³) | Particle size (mm) | Resin | Dispersion index |
|---|---|---|---|---|---|---|---|
| Example 13 | #45 | Molded product | 3.9 (40) | 0.761 | 1.0-2.0 | ABS | 1336 |
| Example 14 | #45 | Molded product | 3.9 (40) | 0.761 | 0.50-1.0 | ABS | 1884 |
| Example 15 | #45 | Molded product | 3.9 (40) | 0.761 | 0.25-0.50 | ABS | 1113 |
| Example 16 | #45 | Molded product | 3.9 (40) | 0.761 | 0.15-0.25 | ABS | 1268 |
| Example 17 | #45 | Molded product | 8.6 (88) | 0.850 | 1.0-2.0 | ABS | 1157 |
| Example 18 | #45 | Molded product | 8.6 (88) | 0.850 | 0.50-1.0 | ABS | 1520 |
| Example 19 | #45 | Molded product | 8.6 (88) | 0.850 | 0.25-0.50 | ABS | 1404 |
| Example 20 | #45 | Molded product | 8.6 (88) | 0.850 | 0.15-0.25 | ABS | 1478 |
| Example 21 | #45 | Molded product | 3.9 (40) | 0.761 | 1.0-2.0 | LDPE | 334 |
| Example 22 | #45 | Molded product | 3.9 (40) | 0.761 | 0.50-1.0 | LDPE | 347 |

Table 11 (continued) Examples and Comparative Examples

| | Brand name | Form | Molding pressure mPa (kg/cm²) | Bulk density (g/cm³) | Particle size (mm) | Resin | Dispersion index |
|---|---|---|---|---|---|---|---|
| Example 23 | #45 | Molded product | 3.9 (40) | 0.761 | 0.25-0.50 | LDPE | 327 |
| Example 24 | #45 | Molded product | 3.9 (40) | 0.761 | 0.15-0.25 | LDPE | 341 |
| Example 25 | #45 | Molded product | 8.6 (88) | 0.850 | 1.0-2.0 | LDPE | 352 |
| Example 26 | #45 | Molded product | 8.6 (88) | 0.850 | 0.50-1.0 | LDPE | 405 |
| Example 27 | #45 | Molded product | 8.6 (88) | 0.850 | 0.25-0.50 | LDPE | 446 |
| Comparative Example 13 | #45B | Dry system granulated product | - | 0.481 | 1.0-2.0 | ABS | 1739 |
| Comparative Example 14 | #45B | Dry system granulated product | - | 0.481 | 0.50-1.0 | ABS | 1676 |
| Comparative Example 15 | #45B | Dry system granulated product | - | 0.481 | 0.25-0.50 | ABS | 1953 |

EP 0 945 494 B1

Table 11 (continued)  Examples and Comparative Examples

| | Brand name | Form | Molding pressure mPa (kg/cm²) | Bulk density (g/cm³) | Particle size (mm) | Resin | Dispersion index |
|---|---|---|---|---|---|---|---|
| Comparative Example 16 | #45B | Dry system granulated product | - | 0.481 | 0.15-0.25 | ABS | 2110 |
| Comparative Example 17 | #45BW | Wet system granulated product | - | 0.552 | 1.0-2.0 | ABS | 2141 |
| Comparative Example 18 | #45BW | Wet system granulated product | - | 0.552 | 0.50-1.0 | ABS | 2086 |
| Comparative Example 19 | #45BW | Wet system granulated product | - | 0.552 | 0.25-0.50 | ABS | 2168 |
| Comparative Example 20 | #45BW | Wet system granulated product | - | 0.552 | 0.15-0.25 | ABS | 2307 |
| Comparative Example 21 | #45BW | Dry system granulated product | - | 0.481 | 1.0-2.0 | LDPE | 533 |

EP 0 945 494 B1

Table 11 (continued) Examples and Comparative Examples

| | Brand name | Form | Molding pressure mPa (kg/cm²) | Bulk density (g/cm³) | Particle size (mm) | Resin | Dispersion index |
|---|---|---|---|---|---|---|---|
| Comparative Example 22 | #45B | Dry system granulated product | – | 0.481 | 0.50-1.0 | LDPE | 530 |
| Comparative Example 23 | #45B | Dry system granulated product | – | 0.481 | 0.25-0.50 | LDPE | 646 |
| Comparative Example 24 | #45B | Dry system granulated product | – | 0.481 | 0.15-0.25 | LDPE | 734 |
| Comparative Example 25 | #45BW | Wet system granulated product | – | 0.552 | 1.0-2.0 | LDPE | 541 |
| Comparative Example 26 | #45BW | Wet system granulated product | – | 0.552 | 0.50-1.0 | LDPE | 584 |
| Comparative Example 27 | #45BW | Wet system granulated product | – | 0.552 | 0.25-0.50 | LDPE | 584 |

EP 0 945 494 B1

34

Table 12   Examples and Comparative Examples

| | Molding pressure mPa (kg/cm²) | Bulk density (g/cm³) | Dispersing time (hrs) | Dispersibility (μm) | Blackness | | Gloss | Tinting strength |
|---|---|---|---|---|---|---|---|---|
| | | | | | L value by color difference meter | Visual | Visual | L value by color difference meter |
| Example 28 | 0.18 (1.9) | 0.266 | 0.25 | 15 | 4.78 | 10+ | 12 | 44.9 |
| Example 29 | | | 0.5 | 9.0 | 4.68 | 10+ | 11+ | 41.7 |
| Example 30 | | | 1.0 | 7.5 | 4.48 | 11− | 12 | 39.5 |
| Example 31 | | | 2.0 | 7.5 | 4.23 | 10+ | 10+ | 39.6 |
| Example 32 | 36.5 (372) | 0.842 | 0.25 | 15 | 4.13 | 11− | 15 | 39.7 |
| Example 33 | | | 0.5 | 7.5 | 4.33 | 11 | 12 | 39.0 |
| Example 34 | | | 1.0 | 7.5 | 4.19 | 13 | 13 | 38.3 |
| Example 35 | | | 2.0 | 8.0 | 3.96 | 12 | 11 | 38.3 |

EP 0 945 494 B1

Table 12 (continued)  Examples and Comparative Examples

| | Molding pressure mPa (kg/cm²) | Bulk density (g/cm³) | Dispersing time (hrs) | Dispersibility (μm) | Blackness | | Gloss | Tinting strength |
| | | | | | L value by color difference meter | Visual | Visual | L value by color difference meter |
|---|---|---|---|---|---|---|---|---|
| Comparative Example 28 | − | 0.077 | 0.25 | 17 | 4.83 | 10 | 10 | 45.8 |
| Comparative Example 29 | − | | 0.5 | 10 | 4.76 | | | 41.9 |
| Comparative Example 30 | − | | 1.0 | 7.5 | 4.50 | | | 39.7 |
| Comparative Example 31 | − | | 2.0 | 8.0 | 4.23 | | | 39.7 |

EP 0 945 494 B1

Table 12 (continued)  Examples and Comparative Examples

| | Molding pressure (kgf/cm²) MPa | Bulk density (g/cc) cm³ | Disper-sing time (hrs) | Disper-sibility (μm) | Blackness | | Gloss | Tinting strength |
| | | | | | L value by color difference meter | Visual | Visual | L value by color difference meter |
|---|---|---|---|---|---|---|---|---|
| Comparative Example 32 | − | | 0.25 | 19 | 4.35 | | | 43.4 |
| Comparative Example 33 | − | 0.463 | 0.5 | 7.5 | 4.46 | 10 | 10 | 40.4 |
| Comparative Example 34 | − | | 1.0 | 7.5 | 4.29 | | | 38.6 |
| Comparative Example 35 | − | | 2.0 | 9.0 | 4.01 | | | 38.6 |

EP 0 945 494 B1

Table 13

| Examples and Comparative Examples | | | | | | |
|---|---|---|---|---|---|---|
| | Trade name | Form | Bulk density (g/cm$^3$) | Loss factor | Heat build-up (°C) | Dispersibility (%) |
| Example 36 | DIA-I | Molded product | 0.522 | 0.139 | 31.0 | 99.2 |
| Example 37 | DIA-H | | 0.491 | 0.107 | 26.0 | 99.6 |
| Example 38 | DIA-G | | 0.639 | 0.058 | 17.0 | 99.9 |
| Comparative Example 36 | DIA-I | Wet System granulated product | 0.351 | 0.152 | 35.0 | 95.4 |
| Comparative Example 37 | DIA-H | | 0.352 | 0.123 | 29.0 | 97.3 |
| Comparative Example 38 | DIA-G | | 0.445 | 0.065 | 19.0 | 98.0 |

Table 14 Blend proportions

| | Example 36 | Example 37 | Example 37 | Comparative Example 36 | Comparative Example 37 | Comparative Example 38 |
|---|---|---|---|---|---|---|
| Type of carbon black | DIA-I | DIA-H | DIA-G | DIA-I | DIA-H | DIA-G |
| Form of carbon black | Molded product | | | Wet system granulated product (beads) | | |
| Natural rubber *1 | 100 | 100 | 100 | 100 | 100 | 100 |
| CB*2 | 50 | | | 50 | | |
| CB*3 | | 50 | | | 50 | |
| CB*4 | | | 50 | | | 50 |
| Zinc white | 5 | 5 | 5 | 5 | 5 | 5 |
| Stearic acid | 3 | 3 | 3 | 3 | 3 | 3 |
| Age resistor*5 | 1 | 1 | 1 | 1 | 1 | 1 |
| Sulfur | 2 | 2 | 2 | 2 | 2 | 2 |
| Vulcanization accelerator*6 | 0.7 | 0.7 | 0.7 | 0.7 | 0.7 | 0.7 |
| Total | 161.7 | 161.7 | 161.7 | 161.7 | 161.7 | 161.7 |

*1: SMR-L, *2: DIA-I, *3: DIA-H, *4: DIA-G, *5: N-(1,3-dimethylbutyl)-N'-phenylenediamine; Santoflex 13 (manufactured by Monsanto Co.), *6: N-Cyclohexyl-2-benzothiazylsulfenamide; Nokseller CZ (manufactured by Ouchi Shinkosha K.K.)

EP 0 945 494 B1

INDUSTRIAL APPLICABILITY

According to the present invention, it is possible to obtain a press molded product of carbon black which is excellent in the compacting property and suitable for handling, without impairing the basic properties of carbon black. Further, this press molded product of carbon black can be made to have improved blackness as compared with the blackness prior to molding.

**Claims**

1. A press molded product of carbon black having a density $\rho$ (g/cm$^3$) which is at least

$$\rho = 8.190 \times 10^{-3}D - 3.824 \times 10^{-3}L + 0.516$$

and at most

$$\rho = 3.265 \times 10^{-3}D - 3.334 \times 10^{-3}L + 1.173$$

wherein D is the arithmetic mean particle size (nm) of carbon black by an electron microscope, and L is the DBP oil absorption according to JIS K6221-1982 (ml / 100 g), and
wherein said press molded product of carbon black is produced by press molding carbon black and has a volume of at least 1 cm$^3$.

2. The press molded product of carbon black according to claim 1, wherein the density p (g/cm3) is at least

$$\rho = 8.686 \times 10^{-3}D - 4.031 \times 10^{-3}L + 0.543$$

and at most

$$\rho = 3.123 \times 10^{-3}D - 3.189 \times 10^{-3}L + 1.072$$

wherein D is the arithmetic mean particle size (nm) of carbon black by an electron microscope, and L is the DBP oil absorption according to JIS K6221-1982 (ml/ 100 g).

3. The press molded product of carbon black according to claim 1 or 2,
wherein the carbon black is the one obtained by a furnace method.

4. The press molded product of carbon black according to claim 3, wherein the particle size of the carbon black is at least 1 nm and at most 60 nm.

5. The press molded product of carbon black according to any one of claims 1 to 4, which has a powdering ratio of at most 40%.

6. The press molded product of carbon black according to any one of claims 1 to 5, wherein the bulk density of the press molded product of carbon black is from 2.5 to 8 times the bulk density of starting material carbon black.

7. The press molded product of carbon black according to any one of claims 1 to 6, wherein the pressure at the time of press molding carbon black is at least 0.196 MPa (2 kgf/cm$^2$) and at most 49 MPa (500 kgf/cm$^2$).

8. The press molded product of carbon black according to any one of claims 1 to 7, which has a columnar shape having a triangle or other polygonal cross-section.

9. The press molded product of carbon black according to claim 8, wherein the shape of the molded product is cubic or rectangular parallelpiped.

10. The press molded product of carbon black according to any one of claims 1 to 9, wherein the press molded product of carbon black is the one obtained by preliminary degassing a gas among carbon black particles by means of a reduced pressure chamber, followed by press molding.

11. The press molded product of carbon black according to claim 10, wherein degassing of the gas among carbon black particles is carried out by preliminarily reducing the pressure to from 1.33 Pa to $6.67\cdot10^4$ Pa (0.01 to 500 Torr).

12. The press molded product of carbon black according to any one of claims 1 to 11, wherein the density control of the press molded product of carbon black is carried out by measuring the resistance thereof.

13. The press molded product of carbon black according to claim 12, wherein the resistance is the volume resistance.

14. The press molded product of carbon black according to claim 13, wherein the density control is carried out by measuring the volume resistance of the molded product in a mold during or after the press molding of carbon black.

15. The press molded product of carbon black according to any one of claims 12 to 14, wherein the measurement of the resistance is carried out by a four probe method.

16. The press molded product of carbon black according to any one of claims 1 to 15, wherein at the time of press molding, an operation of filling and pressing the starting material is repeated a plurality of times.

17. The press molded product of carbon black according to claim 16, wherein the final pressure in the pressing operation is 1.2 times of the maximum pressure among the pressures for the pressing operation prior thereto.

18. The press molded product of carbon black according to any one of claims 1 to 17, which is obtained by an apparatus for press molding carbon black filled in a mold, wherein the apparatus has a porous body having an average pore size of at most 10 $\mu$m at at least a part of the contacting surface with the carbon black.

19. The press molded product of carbon black according to claim 18, wherein the porous body having an average pore size of at most 10 $\mu$m is a filter paper, a filter cloth or a fluorine resin porous film.

20. The press molded product of carbon black according to claim 18 or 19, wherein the porous body is formed on a piston surface of the press molding apparatus.

21. A method for producing the press molded product of carbon black as defined in any one of claims 1 to 20, wherein when the press molded product of carbon black is released from the mold, it is released under a pressurized state.

22. The method for producing the press molded product of carbon black according to claim 21, wherein the pressure at the time of releasing is from $9.8\cdot10^2$ Pa to 0.49 MPa (0.01 to 5 kgf/cm$^2$) and within a range not to exceed the pressure during the press molding.

23. The press molded product of carbon black according to any one of claims 1 to 20, which is prepared by press molding carbon black having a water content of from 0.5 to 11 wt%.

24. The press molded product of carbon black according to any one of claims 1 to 20 and 23, which is prepared by press molding carbon black which is preliminarily granulated.

25. The press molded product of carbon black according to claim 24, wherein the carbon black which is preliminarily granulated, has an average particle size of 15 $\mu$m.

26. A method for producing an ink, wherein the press molded product of carbon black as defined in any one of claims 1 to 20, 23 and 24 is used as a pigment.

27. A method for producing a coating material, wherein the press molded product of carbon black as defined in any one of claims 1 to 20, 23 and 24 is used as a pigment.

28. A method for producing a rubber composition, which comprises blending from 30 to 150 parts by weight of the press molded product of carbon black as defined in any one of claims 1 to 20, 23 and 24 to 100 part by weight of at least one of natural rubber and synthetic rubber.

29. A method for producing a resin composition, which comprises blending the press molded product of carbon black as defined in any one of claims 1 to 20, 23 and 24 to a resin component.

30. A method for storing carbon black, which comprises storing carbon black in the form of the press molded product of carbon black as defined in any one of claims 1 to 20, 23 and 24.

31. A method for transporting carbon black, which comprises transporting carbon black in the form of the press molded product of carbon black as defined in any one of claims 1 to 20, 23 and 24.


**Patentansprüche**

1. Pressgeformtes Produkt aus Ruß mit einer Dichte $\rho$ (g/cm$^3$), welche mindestens

$$\rho = 8{,}190 \times 10^{-3}D - 3{,}824 \times 10^{-3} L + 0{,}516$$

und höchstens

$$\rho = 3{,}256 \times 10^{-3}D - 3{,}334 \times 10^{-3}L + 1{,}173$$

beträgt, worin D die arithmetische mittlere Teilchengröße (nm) von Ruß mittels eines Elektronenmikroskops ist, und L die DBP-Ölabsorption gemäß JIS K6221-1982 (ml/100 g) ist, und
wobei das pressgeformte Produkt aus Ruß durch Pressformen von Ruß hergestellt ist und ein Volumen von mindestens 1 cm$^3$ besitzt.

2. Pressgeformtes Produkt aus Ruß nach Anspruch 1, wobei die Dichte $\rho$ (g/cm$^3$) mindestens

$$\rho = 8{,}686 \times 10^{-3}D - 4{,}031 \times 10^{-3}L + 0{,}543$$

und höchstens

$$\rho = 3{,}123 \times 10^{-3}D - 3{,}189 \times 10^{-3}L + 1{,}072$$

beträgt, worin D die arithmetische mittlere Teilchengröße (nm) von Ruß mittels eines Elektronenmikroskops ist, und L die DBP-Ölabsorption gemäß JIS K6221-1982 (ml/100 g) ist.

3. Pressgeformtes Produkt aus Ruß nach Anspruch 1 oder 2, wobei der Ruß ein solcher, der durch ein Ofenverfahren erhalten wird.

4. Pressgeformtes Produkt aus Ruß nach Anspruch 3, wobei die Teilchengröße des Rußes mindestens 1 nm und höchstens 60 nm beträgt.

5. Pressgeformtes Produkt aus Ruß nach mindestens einem der Ansprüche 1 bis 4, das ein Pulverisierungsverhältnis von höchstens 40% aufweist.

6. Pressgeformtes Produkt aus Ruß nach mindestens einem der Ansprüche 1 bis 5, wobei die Schüttdichte des pressgeformten Produkts aus Ruß das 2,5- bis 8-fache der Schüttdichte des Ruß-Ausgangsmaterials beträgt.

7. Pressgeformtes Produkt aus Ruß nach mindestens einem der Ansprüche 1 bis 6, wobei der Druck beim Pressformen des Rußes mindestens 0,196 MPa (2 kgf/cm$^2$) und höchstens 49 MPa (500 kgf/cm$^2$) beträgt.

8. Pressgeformtes Produkt aus Ruß nach mindestens einem der Ansprüche 1 bis 7, das eine säulenartige Form mit einem Dreiecks- oder anderen polygonalen Querschnitt aufweist.

9. Pressgeformtes Produkt aus Ruß nach Anspruch 8, wobei die Form des Formprodukts kubisch oder ein rechtwinkliges Parallelepiped ist.

10. Pressgeformtes Produkt aus Ruß nach mindestens einem der Ansprüche 1 bis 9, wobei das pressgeformte Produkt aus Ruß ein solches ist, erhalten durch vorausgehendes Entgasen eines Gases aus Rußteilchen mittels einer Niederdruckkammer, gefolgt durch Pressformen.

11. Pressgeformtes Produkt aus Ruß nach Anspruch 10, wobei das Entgasen des Gases aus Rußteilchen durchgeführt wird durch vorausgehendes Reduzieren des Drucks auf 1,33 Pa bis $6,67 \cdot 10^4$ Pa (0,01 bis 500 Torr).

12. Pressgeformtes Produkt aus Ruß nach mindestens einem der Ansprüche 1 bis 11, wobei die Dichteregulierung des pressgeformten Produkts aus Ruß durchgeführt wird durch Messen von dessen Widerstand.

13. Pressgeformtes Produkt aus Ruß nach Anspruch 12, wobei der Widerstand der Volumenwiderstand ist.

14. Pressgeformtes Produkt aus Ruß nach Anspruch 13, wobei die Dichteregulierung durchgeführt wird durch Messen des Volumenwiderstandes des geformten Produkts in einer Form während oder nach dem Pressformen des Rußes.

15. Pressgeformtes Produkt aus Ruß nach mindestens einem der Ansprüche 12 bis 14, wobei die Messung des Widerstandes durch eine Vierfühlermethode durchgeführt wird.

16. Pressgeformtes Produkt aus Ruß nach mindestens einem der Ansprüche 1 bis 15, wobei beim Pressformen ein Vorgang des Füllens und Pressens des Ausgangsmaterials mehrmals wiederholt wird.

17. Pressgeformtes Produkt aus Ruß nach Anspruch 16, wobei der Enddruck beim Pressvorgang das 1,2-fache des maximalen Drucks innerhalb der Drucke für den vorausgehenden Pressvorgang beträgt.

18. Pressgeformtes Produkt aus Ruß nach mindestens einem der Ansprüche 1 bis 17, das erhalten wird durch eine Vorrichtung zum Pressformen von Ruß, der in eine Form eingefüllt ist, wobei die Vorrichtung einen porösen Körper mit einer durchschnittlichen Porengröße von höchstens 10 µm an mindestens einem Teil der Kontaktoberfläche mit dem Ruß aufweist.

19. Pressgeformtes Produkt aus Ruß nach Anspruch 18, wobei der poröse Körper mit einer durchschnittlichen Porengröße von höchstens 10 µm ein Filterpapier, ein Filtertuch oder eine poröse Folie aus einem Fluorharz ist.

20. Pressgeformtes Produkt aus Ruß nach Anspruch 18 oder 19, wobei der poröse Körper auf einer Kolbenoberfläche der Pressformvorrichtung gebildet ist.

21. Verfahren zur Herstellung des pressgeformten Produkts aus Ruß gemäß mindestens einem der Ansprüche 1 bis 20, wobei, wenn das pressgeformte Produkt aus Ruß von der Form getrennt wird, es unter einem unter Druck befindlichen Zustand gelöst wird.

22. Verfahren zur Herstellung des pressgeformten Produkts aus Ruß nach Anspruch 21, wobei der Druck beim Lösen $9.8 \cdot 10^2$ Pa bis 0,49 MPa (0,01 bis 5 kgf/cm²) beträgt und innerhalb eines Bereichs liegt, der den Druck während des Pressformens nicht überschreitet.

23. Pressgeformtes Produkt aus Ruß nach mindestens einem der Ansprüche 1 bis 20, das hergestellt wird durch Pressformen von Ruß mit einem Wassergehalt von 0.1 bis 11 Gew.-%.

24. Pressgeformtes Produkt aus Ruß nach mindestens einem der Ansprüche 1 bis 20 und 23, das hergestellt wird durch Pressformen von Ruß, welcher vorausgehend granuliert worden ist.

25. Pressgeformtes Produkt aus Ruß nach Anspruch 24, wobei der Ruß, welcher vorausgehend granuliert worden ist, eine durchschnittliche Teilchengröße von 15 µm aufweist.

26. Verfahren zur Herstellung einer Tinte, wobei das pressgeformte Produkt aus Ruß gemäß mindestens einem der Ansprüche 1 bis 20, 23 und 24, als ein Pigment verwendet wird.

27. Verfahren zur Herstellung eines Beschichtungsmaterials, wobei das pressgeformte Produkt aus Ruß gemäß mindestens einem der Ansprüche 1 bis 20, 23 und 24 als ein Pigment verwendet wird.

28. Verfahren zur Herstellung einer Kautschukzusammensetzung, umfassend das Mischen von 30 bis 150 Gewichtsteilen des pressgeformten Produkts aus Ruß gemäß mindestens einem der Ansprüche 1 bis 20, 23 und 24, mit 100 Gewichtsteilen mindestens eines aus natürlichem Kautschuk und synthetischem Kautschuk,

29. Verfahren zur Herstellung einer Harzzusammensetzung, umfassend das Mischen des pressgeformten Produkts aus Ruß gemäß mindestens einem der Ansprüche 1 bis 20, 23 und 24 mit einer Harzkomponente.

30. Verfahren zum Lagern von Ruß, umfassend das Lagern von Ruß in Form des pressgeformten Produkts aus Ruß gemäß mindestens einem der Ansprüche 1 bis 20, 23 und 24.

31. Verfahren zum Transportieren von Ruß, umfassend das Transportieren von Ruß in Form des pressgeformten Produkts aus Ruß gemäß mindestens einem der Ansprüche 1 bis 20, 23 und 24.

**Revendications**

1. Produit en noir de carbone moulé à la presse, ayant une densité $\rho$ (g/cm$^3$) d'au moins

$$\rho = 8{,}190 \times 10^{-3}\,D - 3{,}824 \times 10^{-3}L + 0{,}516$$

et d'au plus

$$\rho = 3{,}265 \times 10^{-3}D - 3{,}334 \times 10^{-3}L + 1{,}173$$

D étant la taille moyenne arithmétique (nm) des particules de noir de carbone obtenue à l'aide d'un microscope électronique, et L étant l'absorption d'huile DBP (ml/100 g) conformément à JIS K6221-1982, et
ledit produit en noir de carbone moulé à la presse étant produit par le moulage à la presse de noir de carbone et ayant un volume d'au moins 1 cm$^3$.

2. Produit en noir de carbone moulé à la presse, selon la revendication 1, dans lequel la densité $\rho$ (g/cm$^3$) est d'au moins

$$\rho = 8{,}686 \times 10^{-3}D - 4{,}031 \times 10^{-3}L + 0{,}543$$

et d'au plus

$$\rho = 3{,}123 \times 10^{-3}D - 3{,}189 \times 10^{-3}L + 1{,}072$$

D étant la taille moyenne arithmétique (nm) des particules de noir de carbone obtenue à l'aide d'un microscope électronique, et L étant l'absorption d'huile DBP (ml/100 g) conformément à JIS K6221-1982.

3. Produit en noir de carbone moulé à la presse, selon la revendication 1 ou 2, dans lequel le noir de carbone est un noir de carbone obtenu par une méthode au four.

4. Produit en noir de carbone moulé à la presse, selon la revendication 3, dans lequel la taille des particules du noir de carbone est d'au moins 1 nm et d'au plus 60 nm.

5. Produit en noir de carbone moulé à la presse, selon l'une quelconque des revendications 1 à 4, ayant un taux de poudrage d'au plus 40%.

**6.** Produit en noir de carbone moulé à la presse, selon l'une quelconque des revendications 1 à 5, dans lequel la densité apparente du produit en noir de carbone moulé à la presse représente de 2,5 à 8 fois la densité apparente du noir de carbone en tant que matière de départ.

**7.** Produit en noir de carbone moulé à la presse, selon l'une quelconque des revendications 1 à 6, dans lequel la pression au moment du moulage à la presse du noir de carbone est d'au moins 0,196 MPa (2 kgf/cm²) et d'au plus 49 MPa (500 kgf/cm²).

**8.** Produit en noir de carbone moulé à la presse, selon l'une quelconque des revendications 1 à 7, ayant une configuration colonnaire de section transversale en forme de triangle ou d'un autre polygone.

**9.** Produit en noir de carbone moulé à la presse, selon la revendication 8, dans lequel le produit moulé est en forme de cube ou de parallélépipède rectangle.

**10.** Produit en noir de carbone moulé à la presse, selon l'une quelconque des revendications 1 à 9, dans lequel le produit en noir de carbone moulé à la presse est un produit obtenu par l'extraction préliminaire d'un gaz présent entre les particules de noir de carbone au moyen d'une chambre à pression réduite, suivie par le moulage à la presse.

**11.** Produit en noir de carbone moulé à la presse, selon la revendication 10, dans lequel l'extraction du gaz présent entre les particules de noir de carbone est réalisée par la réduction préliminaire de la pression de 1,33 Pa à 6,67x10⁴ Pa (0,01 à 500 Torr).

**12.** Produit en noir de carbone moulé à la presse, selon l'une quelconque des revendications 1 à 11, dans lequel le contrôle de densité du produit en noir de carbone moulé à la presse est réalisé par la mesure de la résistance de celui-ci.

**13.** Produit en noir de carbone moulé à la presse selon la revendication 12, dans lequel la résistance est la résistance en volume.

**14.** Produit en noir de carbone moulé à la presse selon la revendication 13, dans lequel le contrôle de densité est réalisé par la mesure de la résistance en volume du produit moulé dans un moule pendant ou après le moulage à la presse du noir de carbone.

**15.** Produit en noir de carbone moulé à la presse, selon l'une quelconque des revendications 12 à 14, dans lequel la mesure de la résistance est réalisée par une méthode à quatre sondes.

**16.** Produit en noir de carbone moulé à la presse, selon l'une quelconque des revendications 1 à 15, dans lequel au moment du moulage à la presse, une opération de remplissage et de compression de la matière de départ est répétée plusieurs fois.

**17.** Produit en noir de carbone moulé à la presse, selon la revendication 16, dans lequel la pression finale au cours de l'opération de compression représente 1,2 fois la pression la plus élevée parmi les pressions utilisées pour l'opération de compression avant elle.

**18.** Produit en noir de carbone moulé à la presse, selon l'une quelconque des revendications 1 à 17, obtenu à l'aide d'un appareil pour mouler à la presse du noir de carbone chargé dans un moule, l'appareil comportant un corps poreux ayant une taille moyenne de pores de 10 μm au plus au niveau d'une partie au moins de sa surface en contact avec le noir de carbone.

**19.** Produit en noir de carbone moulé à la presse, selon la revendication 18, dans lequel le corps poreux qui possède une taille moyenne de pores de 10 μm au plus est un papier filtrant, un tissu filtrant ou un film poreux en résine fluorée.

**20.** Produit en noir de carbone moulé à la presse, selon la revendication 18 ou 19, dans lequel le corps poreux est formé sur une surface de piston de l'appareil de moulage à la presse.

**21.** Procédé de production du produit en noir de carbone moulé à la presse tel que défini dans l'une quelconque des revendications 1 à 20, dans lequel lorsque le produit en noir de carbone moulé à la presse est démoulé, il l'est dans un état sous pression.

22. Procédé de production d'un produit en noir de carbone moulé à la presse, selon la revendication 21, dans lequel la pression au moment du démoulage est de $9,8 \times 10^2$ Pa à 0,49 MPa (0,01 à 5 kgf/cm$^2$) et se situe dans une plage qui ne doit pas excéder la pression au cours du moulage à la presse.

23. Produit en noir de carbone moulé à la presse, selon l'une quelconque des revendications 1 à 20, préparé par le moulage à la presse de noir de carbone ayant une teneur en eau de 0,5 à 11 % en poids.

24. Produit en noir de carbone moulé à la presse, selon l'une quelconque des revendications 1 à 20 et 23, préparé par le moulage à la presse de noir de carbone préalablement granulé.

25. Produit en noir de carbone moulé à la presse, selon la revendication 24, dans lequel le noir de carbone qui est préalablement granulé a une taille moyenne de particules de 15 μm.

26. Procédé de production d'une encre, dans lequel le produit en noir de carbone moulé à la presse tel que défini dans l'une quelconque des revendications 1 à 20, 23 et 24 est utilisé comme pigment.

27. Procédé de production d'une matière de revêtement, dans lequel le produit en noir de carbone moulé à la presse tel que défini dans l'une quelconque des revendications 1 à 20, 23 et 24 est utilisé comme pigment.

28. Procédé de production d'une composition de caoutchouc, comprenant le mélange de 30 à 150 parties en poids du produit en noir de carbone moulé à la presse tel que défini dans l'une quelconque des revendications 1 à 20, 23 et 24 avec 100 parties en poids de l'un au moins des éléments comprenant un caoutchouc naturel et un caoutchouc synthétique.

29. Procédé de production d'une composition de résine, comprenant le mélange du produit en noir de carbone moulé à la presse tel que défini dans l'une quelconque des revendications 1 à 20, 23 et 24 avec un composant résine.

30. Procédé de stockage de noir de carbone, comprenant le stockage de noir de carbone sous la forme du produit en noir de carbone moulé à la presse tel que défini dans l'une quelconque des revendications 1 à 20, 23 et 24.

31. Procédé de transport de noir de carbone, comprenant le transport de noir de carbone sous la forme du produit en noir de carbone moulé à la presse tel que défini dans l'une quelconque des revendications 1 à 20, 23 et 24.

# FIGURE 1

# FIGURE 2